# EUROPEAN PATENT APPLICATION

(11) **EP 3 637 821 A1**
(43) Date of publication of application: **15.04.2020**
(21) Application number: 18816701.9
(22) Date of filing: 15.06.2018
(51) Int. Cl.: H04W 16/14, H04W 72/04

(54) **CONTROL INFORMATION TRANSMISSION METHOD AND APPARATUS**

(30) Priority: 16.06.2017 CN 201710459139
(71) Applicant: Huawei Technologies Co., Ltd., Longgang District Shenzhen, Guangdong 518129 (CN)
(72) Inventor: WU, Zuomin, Shenzhen Guangdong 518129 (CN); GUAN, Lei, Shenzhen Guangdong 518129 (CN)
(74) Representative: Pfenning, Meinig & Partner mbB
(86) International application number: PCT/CN2018/091486
(87) International publication number: WO 2018/228529

(57) **Abstract**

This application provides a control information transmission method and apparatus, where a first carrier used by a communications system to which the method and the apparatus are applicable is divided into N sub-bands, and a frequency domain resource of the first carrier is a frequency domain resource used based on a contention mechanism. The method includes: detecting, by a first communications device, at least one sub-band in K sub-bands, to determine, in the K sub-bands, M sub-bands that can be used by the first communications device, where the K sub-bands includes P candidate control resource sets; determining, by the first communications device, a first candidate control resource set in the P candidate control resource sets based on a result of the detection, where the first candidate control resource set occupies S sub-bands in the M sub-bands; and sending, by the first communications device, control information to the second communications device through a resource in the first candidate control resource set, so that communication efficiency is improved, service transmission latency is reduced, and user experience is improved.

## Description

This application claims priority to Chinese Patent Application No. 201710459139.6, entitled "CONTROL INFORMATION TRANSMISSION METHOD AND APPARATUS" filed with the Chinese Patent Office on June 16, 2017, which is incorporated by reference in its entirety.

### TECHNICAL FIELD

This application relates to the communications field, and more specifically, to a control information transmission method and apparatus.

### BACKGROUND

With development and popularization of communications technologies, a quantity of terminal devices is greatly increased. Currently, it has been difficult to satisfy requirements by licensed spectrum resources that can be provided by communications systems. When a large quantity of terminal devices share a same licensed spectrum resource, communication is likely to be congested, which seriously affects reliability and user experience of the communication.

To resolve the foregoing problem, an unlicensed spectrum resource-based communication technology emerges, and in the technology, a transmit-end communications device (for example, a network device or a terminal device) needs to detect (in other words, contend for or monitor) a specific unlicensed spectrum resource (which, for ease of understanding and description, is marked below as: unlicensed spectrum resource #1), and when determining that the unlicensed spectrum resource #1 is usable (for example, succeeds in contending for the unlicensed spectrum resource #1), transmits control information to a receive-end communications device through the unlicensed spectrum resource #1, and further, completes scheduling of a subsequent data channel and the like based on the control information.

In the prior art, a bandwidth of the unlicensed spectrum resource #1 is 20 megahertz (Mega Hertz, MHz). In addition, in a process of detecting an unlicensed frequency spectrum resource, a bandwidth that can be detected by a communications device is 20 MHz. Therefore, the communications device can complete full-bandwidth detection on the unlicensed spectrum resource #1 through one time of detection. If the transmit-end communications device detects that all resources within a bandwidth range of the unlicensed spectrum resource #1 are usable, the transmit-end communications device sends control information through the unlicensed spectrum resource #1.

With development based on the foregoing unlicensed spectrum resource-based communication technology, a bandwidth of an unlicensed spectrum resource that can be used by a communications system is gradually increased, and a bandwidth of an unlicensed spectrum resource (for example, the foregoing unlicensed spectrum resource #1) that is allocated by a network device to a terminal device may also be increased. To be specific, the bandwidth of the unlicensed spectrum resource #1 is greater than 20 MHz. For example, the bandwidth of the unlicensed spectrum resource #1 may reach 400 MHz.

In this case, based on the foregoing prior art, the transmit-end communications device needs to detect the unlicensed spectrum resource #1 that is greater than 20 MHz, and uses the unlicensed spectrum resource #1 for wireless communication, for example, sending control information, only when detecting that all resources within a bandwidth range of the unlicensed spectrum resource #1 can be used. Because it is required that the transmit-end communications device can use the unlicensed spectrum resource #1 to send the control information only when all the resources within the bandwidth range of the unlicensed spectrum resource #1 are usable, a probability that the transmit-end communications device succeeds in contending for the unlicensed spectrum resource #1 is relatively low, and further a possibility that the transmit-end communications device can perform wireless communication by using the unlicensed spectrum resource #11 that is obtained through contention is relatively small. Consequently, communication efficiency is reduced, service transmission latency is increased, and user experience is seriously affected.

### SUMMARY

This application provides a control information transmission method and apparatus, capable of improving communication efficiency, reducing service transmission latency, and improving user experience.

According to a first aspect, a control information transmission method is provided, where the method is applied to a communications system including a first communications device and a second communications device, where a first carrier used by the communications system is divided into N sub-bands, where N≥2, and a frequency domain resource of the first carrier is a frequency domain resource used based on a contention mechanism, and the method includes: detecting, by the first communications device, at least one sub-band in K sub-bands, to determine, in the K sub-bands, M sub-bands that can be used by the first communications device, where the K sub-bands belong to the N sub-bands, the K sub-bands include P candidate control resource sets, and each candidate control resource set in the P candidate control resource sets occupies at least one sub-band in the K sub-bands, where N≥K≥2, K≥M≥1, and P≥2; determining, by the first communications device, a first candidate control resource set in the P candidate control resource sets based on a result of the detection, where the first candidate control resource set occupies S sub-bands in the M sub-bands, where M≥S≥1; and sending, by the first communications device, control information to the second communications device through a resource in the first candidate control resource set.

According to the control information transmission method of an embodiment of the present invention, the first communications device that serves as a transmit end is enabled to detect K sub-bands that are pre-configured in a first carrier and that are used to transmit control information, so that M sub-bands that can be used (for example, obtained through contention) by the first communications device can be determined in the K sub-bands, and further, the first communications device can determine a first candidate control resource set in the M sub-bands, and therefore, can send the control information through the first candidate control resource set. To be specific, compared with the prior art, it is not required that the terminal device can use the first carrier to perform wireless communication only when determining that all resources within a bandwidth range of the first carrier are used, so that a possibility that the terminal device can use the first carrier to transmit the control information and reliability are improved. Further, communication efficiency can be improved, service transmission latency can be reduced, and user experience can be improved.

Optionally, P=K, each candidate control resource set in the P candidate control resource sets occupies one sub-band in the K sub-bands, and the P candidate control resource sets and the K sub-bands are in one-to-one correspondence to each other.

A control resource set is set on each sub-band, so that each sub-band obtained through contention can transmit the control information. Therefore, reliability of transmitting control information in this embodiment of the present invention can be further improved.

Optionally, the S sub-bands are some sub-bands in the M sub-bands. The control information is transmitted on some sub-bands in the sub-bands obtained through contention, so that a quantity of sub-bands that a transmit end and a receive end need to process and that are used to carry the control information can be reduced. Therefore, processing loads of the transmit end and the receive end are reduced.

Optionally, the S sub-bands are S sub-bands located on a tail end of the M sub-bands arranged in ascending order of index numbers.

Optionally, the S sub-bands are S sub-bands located on a head end of the M sub-bands arranged in ascending order of index numbers.

Optionally, the S sub-bands are sub-bands preset by the network device.

Optionally, the S sub-bands are sub-bands specified by the communications system.

Optionally, the S sub-bands are sub-bands determined based on a cell identifier of a cell at which the first communications device and the second communications device are located.

Optionally, the S sub-bands are sub-bands determined based on a device identifier of the first communications device or the second communications device.

Optionally, the method further includes: sending, by the first communications device, first indication information to the second communications device, where the first indication information is used to indicate the M sub-bands that can be used by the first communications device.

The first communications device is enabled to send the first indication information to the second communications device, so that the second communications device is enabled to determine the M sub-bands. Therefore, the second communications device can be prevented from detecting the control information on a resource out of the M sub-bands, and further, a processing load of the second communications device can be reduced.

Optionally, the sending, by the first communications device, first indication information to the second communications device includes: sending, by the first communications device, the first indication information to the second communications device through a resource in at least one sub-band in the M sub-bands, where a size and/or a location of the resource in the at least one sub-band are or is specified by the communications system, or a size and/or a location of the resource in the at least one sub-band are or is determined by the first communications device or the second communications device.

Optionally, the first communications device is a network device, and the second communications device is a terminal device.

Optionally, the method further includes: sending, by the first communications device to the second communications device, a first data channel in at least one data channel scheduled based on the control information, where the control information includes resource allocation information, and the resource allocation information is used to indicate at least two sub-bands that are occupied by the first data channel and that are in the N sub-bands.

Optionally, the method further includes: receiving, by the first communications device from the second communications device, a second data channel in at least one data channel scheduled based on the control information, where the control information includes resource allocation information, and the resource allocation information is used to indicate at least two sub-bands that are occupied by the second data channel and that are in the N sub-bands.

Optionally, the first communications device is a terminal device, and the second communications device is a network device.

Optionally, the K sub-bands in the N sub-bands are specified by the communications system.

Optionally, the K sub-bands are determined by the network device in the N sub-bands and notified to the terminal device, where the network device is one of the first communications device and the second communications device, and the terminal device is the other one of the first communications device and the second communications device.

Optionally, the K sub-bands are specified by the communications system.

Optionally, each candidate control resource set in the P candidate control resource sets includes at least one control resource, where the control resource is a resource unit used to transmit the control information.

Optionally, the control resource includes a resource element RE, and the candidate control resource set includes a resource element group REG.

Optionally, the control resource includes a resource block RB, and the candidate control resource set includes a resource block group RBG.

Optionally, the control resource includes a control channel element CCE, and the candidate control resource set includes a CCE group.

Optionally, the P candidate control resource sets include at least one first candidate resource set group, one first candidate resource set group includes at least two candidate resource sets, and an intersection set between candidate resource sets in a same first candidate resource set group is not an empty set.

Optionally, the P candidate control resource sets include at least one second candidate resource set group, one second candidate resource set group includes at least two candidate resource sets, and an intersection set between candidate resource sets in a same second candidate resource set group is an empty set.

Optionally, the determining, by the first communications device, a first candidate control resource set in the P candidate control resource sets based on a result of the detection includes: determining, by the first communications device, a first candidate control resource set in the P candidate control resource sets based on the result of the detection and a size of a search space used by the second communications device, so that a quantity of control resources included in the first candidate control resource set is greater than or equal to a quantity of control resources corresponding to the search space used by the second communications device.

Optionally, at least one search space used by the second communications device includes a common search space used by the second communications device.

Optionally, at least one search space used by the second communications device includes a specific search space used by the second communications device.

Optionally, there is one first candidate control resource set, and the first candidate control resource set corresponds to one search space.

Optionally, there is one first candidate control resource set, and the first candidate control resource set corresponds to at least two search spaces.

Optionally, there are at least two first candidate control resource sets, and the at least two first candidate control resource sets correspond to one search space.

Optionally, one search space occupies at least one candidate control resource set in the P candidate control resource sets.

Optionally, at least one third candidate control resource set exists in the P candidate control resource sets, where one third candidate control resource set corresponds to one (complete) search space.

Optionally, at least one fourth candidate control resource set exists in the P candidate control resource sets, where one fourth candidate control resource set corresponds to at least two (complete) search spaces.

Optionally, aggregation levels of the at least two (complete) search spaces are different.

Optionally, at least two fifth candidate control resource set exist in the P candidate control resource sets, where the at least two fifth candidate control resource sets are in one-to-one correspondence to one (complete) search space.

According to a second aspect, a control information transmission method is provided, where the method is applied to a communications system including a first communications device and a second communications device, where a first carrier used by the communications system is divided into N sub-bands, where N≥2, and a frequency domain resource of the first carrier is a frequency domain resource used based on a contention mechanism, and the method includes: determining, by the second communications device, a first candidate control resource set in P candidate control resource sets in K sub-bands, where the first candidate control resource set occupies S sub-bands in M sub-bands, the M sub-bands are sub-bands that are in the K sub-bands and that can be used by the first communications device, the K sub-bands belong to the N sub-bands, and each candidate control resource set in the P candidate control resource sets occupies at least one sub-band in the K sub-bands, where N≥K≥2, K≥M≥1, P≥2, and M≥S≥1; and receiving, by the second communications device, control information from the first communications device through a resource in the first candidate control resource set.

Optionally, P=K, each candidate control resource set in the P candidate control resource sets occupies one sub-band in the K sub-bands, and the P candidate control resource sets and the K sub-bands are in one-to-one correspondence to each other.

Optionally, the S sub-bands are some sub-bands in the M sub-bands.

Optionally, the S sub-bands are S sub-bands located on a tail end of the M sub-bands arranged in ascending order of index numbers.

Optionally, the S sub-bands are S sub-bands located on a head end of the M sub-bands arranged in ascending order of index numbers.

Optionally, the S sub-bands are sub-bands preset by the network device.

Optionally, the S sub-bands are sub-bands specified by the communications system.

Optionally, the S sub-bands are sub-bands determined based on a cell identifier and/or a device identifier.

Optionally, the method further includes: receiving, by the second communications device, first indication information from the first communications device, where the first indication information is used to indicate the M sub-bands; and determining, by the second communications device, the first candidate control resource set in the P candidate control resource sets based on the M sub-bands.

Optionally, the receiving, by the second communications device, first indication information from the first communications device includes: receiving, by the second communications device, the first indication information from the first communications device through a resource in at least one sub-band in the M sub-bands, where a size and/or a location of the resource in the at least one sub-band are or is specified by the communications system, or a size and/or a location of the resource in the at least one sub-band are or is determined by the first communications device or the second communications device.

Optionally, the first communications device is a network device, and the second communications device is a terminal device.

Optionally, the method further includes: receiving, by the second communications device from the first communications device, a second data channel in at least one data channel scheduled based on the control information, where the control information includes resource allocation information, and the resource allocation information is used to indicate at least two sub-bands that are occupied by the second data channel and that are in the N sub-bands.

Optionally, the method further includes: sending, by the second communications device to the first communications device, a second data channel in at least one data channel scheduled based on the control information, where the control information includes resource allocation information, and the resource allocation information is used to indicate at least two sub-bands that are occupied by the second data channel and that are in the N sub-bands.

Optionally, the first communications device is a terminal device, and the second communications device is a network device.

According to a third aspect, a control information transmission method is provided, where the method is applied to a communications system including a network device and a terminal device, where a first carrier used by the communications system is divided into N sub-bands, where N≥2, and a frequency domain resource of the first carrier is a frequency domain resource used based on a contention mechanism, and the method includes: detecting, by the network device, at least one sub-band in K sub-bands, to determine, in the K sub-bands, M sub-bands that can be used by the network device, where the K sub-bands belong to the N sub-bands, the K sub-bands include P candidate control resource sets, and each candidate control resource set in the P candidate control resource sets occupies at least one sub-band in the K sub-bands, where N≥K≥2, K≥M≥1, and P≥2; and determining, by the network device, a first candidate control resource set in the P candidate control resource sets based on a result of the detection, where the first candidate control resource set occupies S sub-bands in the M sub-bands, and sending downlink control information to the terminal device.

Optionally, P=K, and each candidate control resource set in the P candidate control resource sets occupies one sub-band in the K sub-bands.

Optionally, M>S.

Optionally, the S sub-bands are S sub-bands having smallest indexes in the M sub-bands.

In other words, an index of each sub-band in the S sub-bands is less than an index of any sub-band other than the S sub-bands in the M sub-bands.

Optionally, the S sub-bands are S sub-bands having largest indexes in the M sub-bands.

In other words, an index of each sub-band in the S sub-bands is greater than an index of any sub-band other than the S sub-bands in the M sub-bands.

Optionally, the S sub-bands are sub-bands preset by the network device.

Optionally, the S sub-bands are sub-bands specified by the communications system.

Optionally, the S sub-bands are sub-bands determined based on a cell identifier and/or an identifier of the terminal device.

Optionally, the method further includes: sending, by the network device, first indication information to the terminal device, where the first indication information is used to indicate the M sub-bands that can be used by the network device.

Optionally, the sending, by the network device, first indication information to the terminal device includes: sending, by the network device, the first indication information to the terminal device through a common control resource in at least one sub-band in the M sub-bands, where a size and/or a location of the common control resource are or is specified by the communications system, or a size and/or a location of the common control resource are or is pre-configured by the network device.

Optionally, the method further includes: sending, by the network device to the terminal device, or receiving, by the network device from the terminal device, a first data channel in at least one data channel scheduled based on the downlink control information, where the downlink control information includes resource allocation information, and the resource allocation information is used to indicate at least two sub-bands that are occupied by the first data channel and that are in the N sub-bands.

According to a fourth aspect, a control information transmission method is provided, where the method is applied to a communications system including a network device and a terminal device, where a first carrier used by the communications system is divided into N sub-bands, where N≥2, and a frequency domain resource of the first carrier is a frequency domain resource used based on a contention mechanism, and the method includes: receiving, by the terminal device, control information from the network device through a resource in a first candidate control resource set, where the first candidate control resource set is determined in P candidate control resource sets in K sub-bands, the first candidate control resource set occupies S sub-bands in M sub-bands, the M sub-bands are sub-bands that are in the K sub-bands serving as detection objects and that can be used by the first communications device, the K sub-bands belong to the N sub-bands, and each candidate control resource set in the P candidate control resource sets occupies at least one sub-band in the K sub-bands, where N≥K≥2, K≥M≥1, P≥2, and M≥S≥1.

Optionally, P=K, and each candidate control resource set in the P candidate control resource sets occupies one sub-band in the K sub-bands.

Optionally, M>S.

Optionally, the S sub-bands are S sub-bands having smallest indexes in the M sub-bands.

In other words, an index of each sub-band in the S sub-bands is less than an index of any sub-band other than the S sub-bands in the M sub-bands.

Optionally, the S sub-bands are S sub-bands having largest indexes in the M sub-bands.

In other words, an index of each sub-band in the S sub-bands is greater than an index of any sub-band other than the S sub-bands in the M sub-bands.

Optionally, the S sub-bands are sub-bands preset by the network device.

Optionally, the S sub-bands are sub-bands specified by the communications system.

Optionally, the S sub-bands are sub-bands determined based on a cell identifier and/or an identifier of the terminal device.

Optionally, the method further includes: receiving, by the terminal device, first indication information from the network device, where the first indication information is used to indicate the M sub-bands; and determining, by the terminal device, the first candidate control resource set in the P candidate control resource sets based on the M sub-bands.

Optionally, the receiving, by the terminal device, first indication information from the network device includes: receiving, by the terminal device, the first indication information from the network device through a resource in at least one sub-band in the M sub-bands, where a size and/or a location of the resource in the at least one sub-band are or is specified by the communications system, or a size and/or a location of the resource in the at least one sub-band are or is determined by the network device.

Optionally, the method further includes: receiving, by the terminal device from the network device, or sending, by the terminal device to the terminal device, a first data channel in at least one data channel scheduled based on the downlink control information, where the downlink control information includes resource allocation information, and the resource allocation information is used to indicate at least two sub-bands that are occupied by the first data channel and that are in the N sub-bands.

According to a fifth aspect, a control information transmission method is provided, where the method is applied to a communications system including a network device and a terminal device, where a first carrier used by the communications system is divided into N sub-bands, where N≥2, and a frequency domain resource of the first carrier is a frequency domain resource used based on a contention mechanism, and the method includes: detecting, by the terminal device, at least one sub-band in K sub-bands, to determine, in the K sub-bands, M sub-bands that can be used by the terminal device, where the K sub-bands belong to the N sub-bands, and the K sub-bands include P candidate control resource sets, where N≥K≥2, K≥M≥1, and P≥2; determining, by the terminal device, a first candidate control resource set in the P candidate control resource sets based on a result of the detection, where the first candidate control resource set occupies S sub-bands in the M sub-bands, where M≥S≥1; and sending, by the terminal device, uplink control information to the network device through a resource in the first candidate control resource set.

Optionally, P=K, and each candidate control resource set in the P candidate control resource sets occupies one sub-band in the K sub-bands.

Optionally, M>S.

Optionally, the S sub-bands are S sub-bands having smallest indexes in the M sub-bands.

In other words, an index of each sub-band in the S sub-bands is less than an index of any sub-band other than the S sub-bands in the M sub-bands.

Optionally, the S sub-bands are S sub-bands having largest indexes in the M sub-bands.

In other words, an index of each sub-band in the S sub-bands is greater than an index of any sub-band other than the S sub-bands in the M sub-bands.

Optionally, the S sub-bands are sub-bands preset by the network device.

Optionally, the S sub-bands are sub-bands specified by the communications system.

Optionally, the S sub-bands are sub-bands determined based on a cell identifier and/or an identifier of the terminal device.

Optionally, the method further includes: sending, by the terminal device, first indication information to the network device, where the first indication information is used to indicate the M sub-bands that can be used by the terminal device.

Optionally, the sending, by the terminal device, first indication information to the network device includes: sending, by the terminal device, the first indication information to the network device through a resource in at least one sub-band in the M sub-bands, where a size and/or a location of the resource are or is specified by the communications system, or a size and/or a location of the resource are or is pre-configured by the network device.

According to a sixth aspect, a control information transmission method is provided, where the method is applied to a communications system including a network device and a terminal device, where a first carrier used by the communications system is divided into N sub-bands, where N≥2, and a frequency domain resource of the first carrier is a frequency domain resource used based on a contention mechanism, and the method includes: receiving, by the network device, control information from the terminal device through a resource in a first candidate control resource set, where the first candidate control resource set is determined in P candidate control resource sets in K sub-bands, the first candidate control resource set occupies S sub-bands in M sub-bands, the M sub-bands are sub-bands that are in the K sub-bands serving as detection objects and that can be used by the first communications device, the K sub-bands belong to the N sub-bands, and each candidate control resource set in the P candidate control resource sets occupies at least one sub-band in the K sub-bands, where N≥K≥2, K≥M≥1, P≥2, and M≥S≥1.

Optionally, P=K, and each candidate control resource set in the P candidate control resource sets occupies one sub-band in the K sub-bands.

Optionally, M>S.

Optionally, the S sub-bands are S sub-bands having smallest indexes in the M sub-bands.

In other words, an index of each sub-band in the S sub-bands is less than an index of any sub-band other than the S sub-bands in the M sub-bands.

Optionally, the S sub-bands are S sub-bands having largest indexes in the M sub-bands.

In other words, an index of each sub-band in the S sub-bands is greater than an index of any sub-band other than the S sub-bands in the M sub-bands.

Optionally, the S sub-bands are sub-bands preset by the network device.

Optionally, the S sub-bands are sub-bands specified by the communications system.

Optionally, the S sub-bands are sub-bands determined based on a cell identifier and/or an identifier of the terminal device.

Optionally, the method further includes: receiving, by the network device, first indication information from the terminal device, where the first indication information is used to indicate the M sub-bands; and determining, by the network device, the first candidate control resource set in the P candidate control resource sets based on the M sub-bands.

Optionally, the receiving, by the network device, first indication information from the terminal device includes: receiving, by the network device, the first indication information from the terminal device through a resource in at least one sub-band in the M sub-bands, where a size and/or a location of the resource in the at least one sub-band are or is specified by the communications system, or a size and/or a location of the resource in the at least one sub-band are or is determined by the network device.

According to a seventh aspect, a control information transmission apparatus is provided, including a unit configured to perform each step in any one of the first aspect to the sixth aspect and the embodiment thereof.

According to an eighth aspect, a control information transmission device is provided, including a memory and a processor, where the memory is configured to store a computer program, the processor is configured to invoke the computer program from the memory and run the computer program, enabling the device to perform the method in any one of the foregoing first aspect to sixth aspect, and an implementation thereof.

According to a ninth aspect, a computer program product is provided. The computer program product includes: computer program code, where when the computer program code is run by a communications unit and a processing unit, or a transceiver and a processor, the communications device is enabled to perform the method in any one of the foregoing first aspect to sixth aspect, and an implementation thereof.

According to a tenth aspect, a computer-readable storage medium is provided. The computer-readable storage medium stores a program, where the program enables a communications device (for example, a network device or a terminal device) to perform the method in any one of the foregoing first aspect to sixth aspect, and an implementation thereof.

With reference to the foregoing aspects and the foregoing implementations thereof, in another implementation, each sub-band includes a plurality of subcarriers.

With reference to the foregoing aspects and the foregoing implementations thereof, in another implementation, a bandwidth of each sub-band is determined based on a bandwidth that a network device or a terminal device can detect in one time of detection (or contention) process.

With reference to the foregoing aspects and the foregoing implementations thereof, in another implementation, a bandwidth of each sub-band is less than or equal to a bandwidth that a network device or a terminal device can detect in one time of detection (or contention) process.

With reference to the foregoing aspects and the foregoing implementations thereof, in another implementation, a bandwidth of each sub-band is 20 MHz.

According to the control information transmission method and apparatus of the embodiments of the present invention, the first communications device that serves as a transmit end is enabled to send control information through M sub-bands that can be used (for example, obtained through contention) by the first communications device and that are in K sub-bands that are pre-configured and that are used to transmit control information. To be specific, compared with the prior art, it is not required that the terminal device can use the first carrier to perform wireless communication only when determining that all resources within a bandwidth range of the first carrier are used, so that a possibility that the terminal device can use the first carrier to transmit the control information and reliability are improved. Further, communication efficiency can be improved, service transmission latency can be reduced, and user experience can be improved.

### BRIEF DESCRIPTION OF DRAWINGS

FIG. 1 is a schematic diagram of an example of a communications system to which a control information transmission method and apparatus according to embodiments of the present invention are applicable;
FIG. 2 is a schematic interaction diagram of an example of a transmission process of control information according to an embodiment of the present invention;
FIG. 3 is a schematic interaction diagram of an example of a transmission process of downlink control information according to an embodiment of the present invention;
FIG. 4 is a schematic diagram of an example of distribution of control resources corresponding to a plurality of aggregation levels of a search space in a candidate control resource set;
FIG. 5 is a schematic diagram of an example of a pattern of a time frequency resource carrying control information according to an embodiment of the present invention;
FIG. 6 is a schematic diagram of another example of a pattern of a time frequency resource carrying control information according to an embodiment of the present invention;
FIG. 7 is a schematic diagram of still another example of a pattern of a time frequency resource carrying control information according to an embodiment of the present invention;
FIG. 8 is a schematic interaction diagram of an example of a transmission process of uplink control information according to an embodiment of the present invention;
FIG. 9 is a schematic block diagram of an example of a control information transmission apparatus according to an embodiment of the present invention; and
FIG. 10 is a schematic block diagram of another example of a control information transmission apparatus according to an embodiment of the present invention.

### DESCRIPTION OF EMBODIMENTS

The following describes technical solutions of this application with reference to accompanying drawings.

The technical solutions of the embodiments of this application may be applied to various communications systems, such as: a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD), a universal mobile telecommunications system (universal mobile telecommunication system, UMTS), a worldwide interoperability for microwave access (worldwide interoperability for microwave access, WiMAX) communications system, a future 5th generation (5th generation, 5G) system, or a new radio (new radio, NR) system.

Usually, a connection quantity supported by a conventional communications system is limited, and is easy to implement. However, with development of communications technologies, a mobile communications system not only supports conventional communication, but also supports device to device (Device to Device, D2D) communication, machine to machine (Machine to Machine, M2M) communication, machine type communication (Machine Type Communication, MTC), and vehicle to vehicle (Vehicle to Vehicle, V2V) communication.

In the embodiments of the present invention, the embodiments are described with reference to a network device and a terminal device.

The terminal device may also be referred to as user equipment (User Equipment, UE), an access terminal, a subscriber unit, a subscriber station, a mobile station, a mobile console, a remote station, a remote terminal, a mobile device, a user terminal, a terminal, a wireless communications device, a user agent, a user apparatus, or the like. The UE may be a cellular phone, a cordless phone, a Session Initiation Protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, an in-vehicle device, a wearable device, a terminal device in a future 5G network, or a terminal device in a future evolved public land mobile network (Public Land Mobile Network, PLMN).

As an example but not a limitation, in the embodiments of the present invention, the terminal device may also be a wearable device. The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of a user. The wearable device not only is a hardware device, but also implements a powerful function through software support, a data exchange, and cloud interaction. Generalized wearable intelligent devices include full-featured and large-size devices that can implement complete or partial functions without depending on smartphones, for example, smart watches or smart glasses, and devices that only focus on a function of a specific type of application and that need to be used together with other devices such as smartphones, for example, various smart bands or smart jewelry for vital sign monitoring.

Moreover, in the embodiments of the present invention, the network device provides a service for a cell, and the terminal device communicates with the network device by using a transmission resource (for example, a frequency domain resource, in other words, a spectrum resource) used by the cell. The cell may be a cell corresponding to the network device (for example, a base station). The cell may belong to a macro base station, or may belong to a base station corresponding to a small cell (Small cell). The small cell herein may include: a metro cell (Metro cell), a micro cell (Micro cell), a pico cell (Pico cell), a femto cell (Femto cell), and the like. These small cells have features of small coverage and low transmit power, and are suitable for providing highspeed data transmission services.

In addition, in an LTE system or a 5G system, a plurality of cells may simultaneously work on a carrier at a same frequency. In some special scenarios, it may also be considered that the concept of carrier is equivalent to the concept of cell. For example, in a carrier aggregation (Carrier Aggregation, CA) scenario, when a secondary component carrier is configured for UE, a carrier index of the secondary component carrier and a cell identity (Cell Identity, Cell ID) of a secondary serving cell operating on the secondary component carrier are both carried. In this case, it may be considered that a concept of a carrier is equivalent to that of a cell. For example, access by the UE to a carrier is equivalent to access to a cell.

The method and apparatus provided in the embodiments of this application may be applied to the terminal device or the network device. The terminal device or the network device includes a hardware layer, an operating system layer run on the hardware layer, and an application layer run on the operating system layer. The hardware layer includes hardware such as a central processing unit (Central Processing Unit, CPU), a memory management unit (Memory Management Unit, MMU), and a memory (also referred to as a main memory). The operating system may be any one or more computer operating systems that implement service processing through a process (Process), for example, a Linux operating system, a Unix operating system, an Android operating system, an iOS operating system, or a Windows operating system. The application layer includes applications such as a browser, a contact list, word processing software, and instant messaging software. In addition, the embodiments of the present invention do not particularly limit a specific structure of an execution body of the method provided in the embodiments of the present invention, provided that a program recording code of the method provided in the embodiments of the present invention can be run to perform communication based on the method provided in the embodiments of the present invention. For example, an execution body of the method provided in the embodiments of the present invention may be a terminal device, a network device, or a function module capable of invoking and running a program in the terminal device or the network device.

In addition, aspects or features in the embodiments of the present invention may be implemented as a method, an apparatus or a product that uses standard programming and/or engineering technologies. The term "product" used in this application covers a computer program that can be accessed from any computer readable component, carrier or medium. For example, the computer-readable medium may include but is not limited to: a magnetic storage component (for example, a hard disk, a floppy disk or a magnetic tape), an optical disc (for example, a compact disc (Compact Disc, CD), a digital versatile disc (Digital Versatile Disc, DVD), a smart card and a flash memory component (for example, erasable programmable read-only memory (Erasable Programmable Read-Only Memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, contain, and/or carry an instruction and/or data.

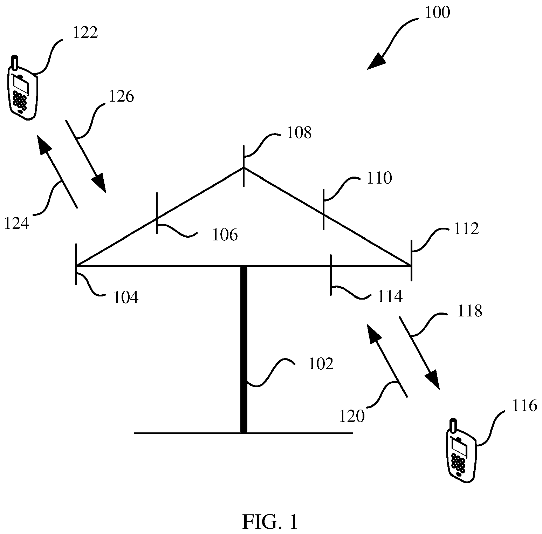

FIG. 1 is a schematic structural diagram of a wireless communications system according to an embodiment of the present invention. As shown in FIG. 1, the communications system 100 includes a network device 102, and the network device 102 may include one or more antennas, for example, antennas 104, 106, 108, 110, 112, and 114. In addition, the network device 102 may additionally include a transmitter chain and a receiver chain. A person of ordinary skill in the art may understand that both the transmitter chain and the receiver chain may include a plurality of components (such as a processor, a modulator, a multiplexer, a demodulator, a demultiplexer, and an antenna) related to signal sending and receiving.

The network device 102 may communicate with a plurality of terminal devices (for example, a terminal device 116 and a terminal device 122). However, it may be understood that the network device 102 may communicate with any quantity of terminal devices similar to the terminal device 116 or the terminal device 122. The terminal devices 116 and 122 may be, for example, a cellular phone, a smartphone, a portable computer, a handheld communications device, a handheld computing device, a satellite radio apparatus, a global positioning system, a PDA, and/or any other suitable devices used for communication in the wireless communications system 100.

As shown in FIG. 1, the terminal device 116 communicates with the antennas 112 and 114. The antennas 112 and 114 send information to the terminal device 116 over a forward link (also referred to as a downlink) 118, and receive information from the terminal device 116 over a reverse link (also referred to as an uplink) 120. In addition, the terminal device 122 communicates with the antennas 104 and 106. The antennas 104 and 106 send information to the terminal device 122 by using a forward link 124, and receive information from the terminal device 122 by using a reverse link 126.

For example, in a frequency division duplex (Frequency Division Duplex, FDD) system, the forward link 118 and the reverse link 120 may use different frequency bands, and the forward link 124 and the reverse link 126 may use different frequency bands.

For another example, in a time division duplex (Time Division Duplex, TDD) system and a full duplex (Full Duplex) system, the forward link 118 and the reverse link 120 may use a same frequency band, and the forward link 124 and the reverse link 126 may use a same frequency band.

Each antenna (or an antenna group including a plurality of antennas) and/or an area designed for communication and/or referred to as a sector of the network device 102. For example, an antenna group may be designed to communicate with a terminal device in the sector within coverage of the network device 102. The network device may send, by using a single antenna or a plurality of antenna transmit diversities, a signal to all terminal devices in a sector corresponding to the network device. In a process in which the network device 102 communicates with the terminal devices 116 and 122 by using the forward links 118 and 124 respectively, a transmit antenna of the network device 102 may improve signal-to-noise ratios of the forward links 118 and 124 through beamforming. In addition, compared with a manner in which the network device sends, by using a single antenna or a plurality of antenna transmit diversities, a signal to all terminal devices served by the network device, when the network device 102 sends, through beamforming, a signal to the terminal devices 116 and 122 that are randomly distributed within related coverage, less interference is caused to a mobile device in a neighboring cell.

In a given time, the network device 102 and the terminal device 116 or the terminal device 122 may be a sending apparatus for wireless communication and/or a receiving apparatus for wireless communication. When sending data, the sending apparatus for wireless communication may encode the data for transmission. Specifically, the sending apparatus for wireless communication may obtain (for example, generate, receive from another communications apparatus, or store in a memory) a particular quantity of data bits to be sent, by using a channel, to the receiving apparatus for wireless communication. The data bit may be included in a transport block (or a plurality of transport blocks) of the data, and the transport block may be segmented to produce a plurality of code blocks.

In addition, the communications system 100 may be a PLMN network, a D2D network, an M2M network, or another network. FIG. 1 is only an example of a simplified schematic diagram, and a network may further include another network device that is not drawn in FIG. 1.

A frequency domain resource used for wireless communication in the embodiments of the present invention is described below in detail.

In the embodiments of the present invention, a frequency domain resource used for wireless communication (for example, uplink transmission or downlink transmission) of a network device and a terminal device is a frequency domain resource that is used based on a contention mechanism.

For example, the network device and/or the terminal device may detect whether a frequency domain resource having a specific bandwidth (for example, 20 MHz) is currently in an idle state, in other words, whether the frequency domain resource is used by another device.

If the frequency domain resource is in an idle state, in other words, the frequency domain resource is not used by another device, the network device and/or the terminal device may use the frequency domain resource to perform communication, for example, perform uplink transmission, downlink transmission, or the like.

If the frequency domain resource is not in an idle state, in other words, the frequency domain resource has been used by another device, the network device and/or the terminal device cannot use the frequency domain resource.

It should be noted that, in this embodiment of this application, a specific method and process of the foregoing contention mechanism may be similar to that in the prior art. To avoid repetition, detailed descriptions are omitted herein.

As an example but not a limitation, in the embodiments of the present invention, a frequency domain resource used by the communications system 100 (in other words, a frequency domain resource used by the network device and the terminal device based on the contention mechanism) may alternatively be a licensed spectrum resource. To be specific, the communications system 100 in the embodiments of the present invention is a communications system that can use a licensed band. In addition, each communications device (the network device and/or the terminal device) in the system 100 may use a frequency domain resource of the licensed band in a contention manner.

A "licensed frequency domain resource" may also be referred to as a "licensed spectrum resource" or a "licensed carrier", and refers to a frequency domain resource whose use needs to be approved by a national or local radio committee. Different systems, for example, an LTE system and a WiFi system, or systems included by different operators cannot share and use a same license frequency domain resource.

The licensed spectrum resource is a spectrum resource that is designated by a radio regulation committee of a government for a special purpose, for example, a spectrum resource that is used by a mobile operator, or a spectrum resource that is exclusively used by civil aviation, railway, and police. Due to policy exclusiveness, service quality of the licensed spectrum resource can be generally ensured, and scheduling control can be relatively easily performed.

Alternatively, in the embodiments of the present invention, a frequency domain resource used by the communications system 100 (in other words, a domain resource used by the network device and the terminal device based on the contention mechanism) may be an unlicensed frequency domain resource.

An "unlicensed frequency domain resource" may also be referred to as an "unlicensed spectrum resource" or an "unlicensed carrier", and refers to a resource in an unlicensed band that can be shared and used by communications devices. "Resource sharing in an unlicensed band" may mean that only indexes, such as transmit power and out-of-band leakage, are specified for use of a particular spectrum, to ensure that a plurality of devices sharing the band meet a basic coexistence requirement. An operator can implement network capacity offloading by using an unlicensed band resource. However, regulatory requirements on an unlicensed band resource in different regions and different spectrums need to be complied with. These requirements are generally formulated to protect a radar or another common system, and ensure that a plurality of systems do not impose harmful impact to each other as far as possible and fairly coexist, and include a transmit power limitation, an out-of-band leakage index, and indoor and outdoor use limitations, and there are some additional coexistence policies and the like in some regions. For example, each communications device can use a frequency domain resource in a contention manner or a monitoring manner, for example, a manner specified by listen before talk (Listen Before Talk, "LBT" for short).

As an example but not a limitation, in the embodiments of the present invention, the unlicensed spectrum resource may include a band near 5 gigahertz (Giga Hertz, GHz), a band near 2.4 GHz, a band near 3.5 GHz, a band near 37 GHz, a band near 60 GHz, or the like.

As an example but not a limitation, in the embodiments of the present invention, the communications system 100 may use technologies such as licensed-assisted access (Licensed-Assisted Access, LAA), dual connectivity (Dual Connectivity, DC), and unlicensed standalone deployment (Standalone). The foregoing technologies may be based on an LTE system, an NR system, or another communications system. This is not limited in the present invention.

In addition, as an example but not a limitation, information transmission in an unlicensed band may not have a fixed frame structure. Generally, the access network device, for example, a base station or a cell, may determine, after successfully preempting an unlicensed spectrum resource, downlink information transmission duration and/or uplink information transmission duration based on downlink service load and/or uplink service load or another considered factor. Further, the access network device may flexibly adjust, after successfully preempting the unlicensed spectrum resource, a quantity of time units including downlink information (that is, downlink time units, where the downlink time units may be downlink transmission time intervals TTI, downlink subframes, downlink slots, downlink mini-slots (mini-slot), or the like), a quantity of time units including uplink information (that is, uplink time units, where the uplink time units may be uplink transmission time intervals TTI, uplink subframes, uplink slots, uplink mini-slots (mini-slot), or the like), transmission duration of downlink information included in each downlink time unit, and transmission duration of uplink information included in each uplink time unit.

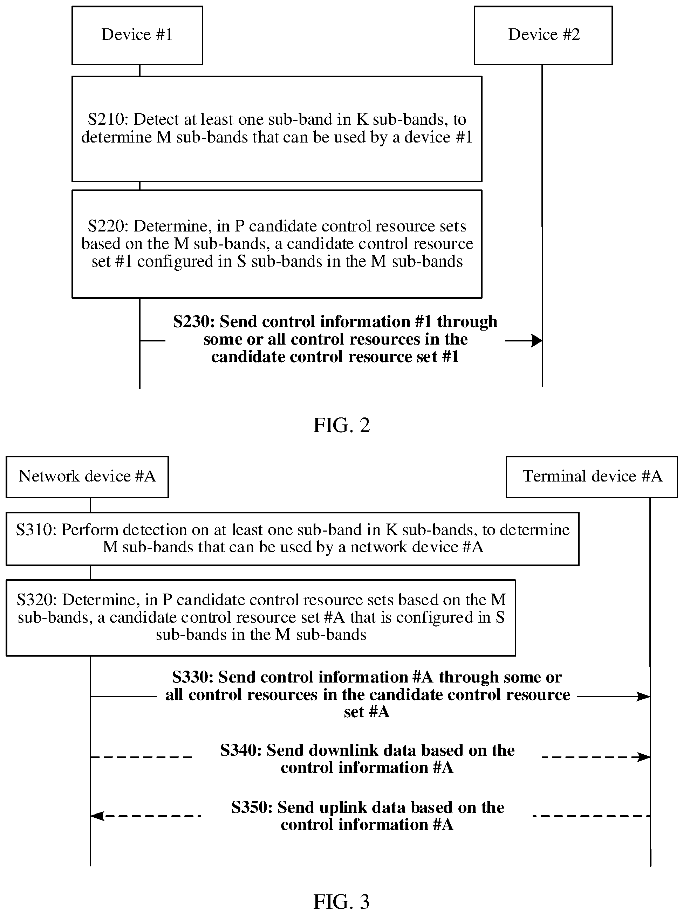

With reference to FIG. 2, a process of transmitting control information between a device #1 (that is, an example of a first communications device) and a device #2 (that is, an example of a second communications device) in a communications system is described below. The device #1 may be a network device, and the device #2 may be a terminal device; or the device #1 may be a terminal device, and the device #2 may be a network device. This is not particularly limited in the present invention.

S210: The device #1 that serves as a transmit end may detect at least one sub-band in K sub-bands, to determine, in the K sub-bands, M sub-bands that can be used by the device #1.

In this embodiment of the present invention, the K sub-bands may belong to N sub-bands.

The N sub-bands may be formed by dividing a carrier (that is, an example of a first carrier, which, for ease of understanding and description, is marked below as: a carrier #1) used for wireless communication between the device #1 and the device #2 that serves as a receive end.

It should be noted that, a system frequency domain resource used by the communications system 100 may include one or more carriers. In this embodiment of the present invention, description is provided by using an example in which the system frequency domain resource used by the communications system 100 includes one carrier (for example, the foregoing carrier #1). The solution may be extended to a case in which the system includes a plurality of carriers. Therefore, details are not provided again. Optionally, the carrier #1 may be a carrier on a licensed spectrum resource, or the carrier #1 may be a carrier on an unlicensed spectrum resource. It should be understood that, a size of the system frequency domain resource exemplified above is provided merely for illustrative description, and the present invention is not limited thereto.

In this embodiment of the present invention, the system frequency domain resources used by the communications system 100 may all be licensed frequency domain resources, or the system frequency domain resources may all be unlicensed frequency domain resources. Further, alternatively, some resources in the system frequency domain resources may be licensed frequency domain resources, and some other resources in the system frequency domain resource may be unlicensed frequency domain resources. This is not particularly limited in the present invention.

For ease of understanding, without loss of generality, a frequency domain resource of the carrier #1 included in the communications system 100 is described below in detail.

As an example but not a limitation, in this embodiment of the present invention, a bandwidth of the carrier #1 may be greater than a preset bandwidth threshold, where the preset bandwidth threshold may be determined based on a bandwidth (for example, 20 MHz) that a terminal device or a network device can process in one time of detection process when the terminal device or the network device detects (in other words, contends for) a frequency domain resource.

In this embodiment of the present invention, a specific bandwidth of the carrier #1 may be any value. This is not particularly limited in the present invention. For example, as an example but not a limitation, a bandwidth of the carrier #1 may be 40 MHz, 60 MHz, 80 MHz, 100 MHz, 160 MHz, or 400 MHz, or may be greater than 400 MHz (for example, 2.16 GHz) or the like.

It may be understood that, when the bandwidth of the carrier #1 is relatively large, a device needs a specific capability to support full-bandwidth signal transmission on the carrier #1. Therefore, optionally, the device #1 and the device #2 both can support the full-bandwidth signal transmission on the carrier #1. Optionally, the device #1 can support full-bandwidth signal transmission on the carrier #1, and the device #2 can only support partial-bandwidth signal transmission on the carrier #1. Optionally, the device #1 can only support partial-bandwidth signal transmission on the carrier #1, and the device #2 can support full-bandwidth signal transmission on the carrier #1.

In this embodiment of the present invention, one carrier (for example, the foregoing carrier #1) used by the communications system 100 may be divided into a plurality of (two or more) sub-bands.

A bandwidth of each sub-band in the plurality of the sub-bands to which the one carrier is divided may be less than or equal to the foregoing preset bandwidth.

In addition, bandwidths of any two sub-bands in the plurality of the sub-bands to which the one carrier is divided may be the same or different. This is not particularly limited in the present invention.

In addition, as an example but not a limitation, in this embodiment of the present invention, each sub-band may include one or more subcarriers.

In this embodiment of the present invention, bandwidths of a plurality of sub-bands (for example, a plurality of the sub-band in the carrier #1) in the system frequency domain resource may be the same. As an example but not a limitation, for example, when the bandwidth of the carrier #1 is 80 MHz, the carrier #1 is divided into four sub-bands, where a bandwidth of each sub-band is 20 MHz.It should be understood that, the quantity of and the sizes of the sub-bands of the carrier #1 that are exemplified above are merely provided for illustrative description, and the present invention is not limited thereto. A quantity of sub-bands and a bandwidth of each sub-band may be arbitrarily adjusted based on actual requirements.

Alternatively, bandwidths of some sub-bands in the system frequency domain resource (for example, a plurality of sub-bands in the carrier #1) may be different. For example, bandwidths of some (one or more) sub-bands in the system frequency domain resource may be, for example, 20 MHz, and bandwidths of some other (one or more) sub-bands in the system frequency domain resource may be, for example, 10 MHz. As an example but not a limitation, for example, a bandwidth of the carrier #1 is 80 MHz, the carrier #1 is divided into three sub-bands, where a bandwidth of one sub-band is 40 MHz, and a bandwidth of each of the other two sub-bands is 20 MHz.It should be understood that, the quantity of and the sizes of the sub-bands of the carrier #1 that are exemplified above are merely provided for illustrative description, and the present invention is not limited thereto. A quantity of sub-bands and a bandwidth of each sub-band may be arbitrarily adjusted based on actual requirements.

As an example but not a limitation, in this embodiment of the present invention, a bandwidth of a sub-band may be determined based on a unit of a frequency domain resource used by a communications device (for example, a network device or a terminal device) in the communications system 100 when the communications device performs channel detection on (in other words, contends for) a source (in other words, a bandwidth of a channel that is detected or contended for by a terminal device in one channel detection or contention process). As an example but not a limitation, a bandwidth of each sub-band in the N sub-bands may be less than or equal to a bandwidth that can be processed by the terminal device or the network device in one process of detecting (in other words, contending for) an unlicensed spectrum, for example, 20 MHz.

For example, in this embodiment of the present invention, assuming that a unit of a frequency domain resource used in the foregoing detection (in other words, contention) is α, and a bandwidth of the sub-band is β, a relationship between α and β can satisfy: β≤α.

For another example, in this embodiment of the present invention, assuming that a unit of a frequency domain resource used in the foregoing detection (in other words, contention) is α, and a bandwidth of the sub-band is β, a relationship between α and β can satisfy: β=*k*^{∗}α, where *k* is a positive integer.

In addition, in this embodiment of the present invention, a size of each sub-band may be notified by the network device through signaling to the terminal device. Alternatively, in this embodiment of the present invention, a size of each sub-band may be specified by the communications system or a communication protocol. This is not particularly limited in the present invention.

To be specific, as stated above, in this embodiment of the present invention, description is provided by using an example in which the carrier #1 includes N (N is an integer greater than or equal to 2) sub-bands.

In addition, K sub-bands in the N sub-bands may be sub-bands that are in the carrier #1 (in other words, the N sub-bands) and that are allocated for wireless communication between the device #1 and the device #2.

To be specific, in this embodiment of the present invention, the K sub-bands belong to the same carrier #1, and the K sub-bands may be all or some sub-bands in the N sub-bands into which the carrier #1 are divided. This is not particularly limited in this embodiment the present invention. For example, in this embodiment of the present invention, all of the N sub-bands may be allocated to the device #1 or the device #2 (that is, K=N). Alternatively, K sub-bands in the N sub-bands may be allocated to the device #1 or the device #2 (that is, K<N).

As an example but not a limitation, for example, in this embodiment of the present invention, the K sub-bands may be sub-bands that are specified by the communications system in the carrier #1 and that are used for wireless communication (for example, transmitting control information, data, or the like) between the device #1 and the device #2, so that the device #1 and the device #2 may determine the K sub-bands based on specifications of the communications system.

For another example, the K sub-bands may have a mapping relationship with a cell configured for wireless communication between the device #1 and the device #2. Therefore, the device #1 and the device #2 may determine the K sub-bands based on relevant information of the cell (for example, a cell identifier). The mapping relationship may be specified by the communications system, or may be determined by the network device and delivered to the terminal device. This is not particularly limited in the present invention.

For another example, the K sub-bands may have a mapping relationship with a terminal device in the device #1 and the device #2, so that the device #1 and the device #2 can determine the K sub-bands based on relevant information of the terminal device (for example, a device identifier of the terminal device). The mapping relationship may be specified by the communications system, or may be determined by the network device and delivered to the terminal device. This is not particularly limited in the present invention.

For another example, the K sub-bands may alternatively be pre-determined by the network device and notified to the terminal device. For example, in this embodiment of the present invention, the K sub-bands may be delivered by the network device to the terminal device in a scheduling time period of a semi-persistent scheduling period. It should be noted that, in this case, the control information may be control information transmitted in a non-scheduling time period of the semi-persistent scheduling period. As an example but not a limitation, the semi-persistent scheduling period may be a scheduling period of the aforementioned unscheduled transmission.

In this embodiment of the present invention, the K sub-bands include P (P is an integer greater than or equal to 2) candidate control resource sets.

The "candidate control resource set" is described below.

In this embodiment of the present invention, one or more (for example, each of) carriers (for example, the foregoing carrier #1, and specifically, all or some sub-bands of the carrier #1) used by the communications system 100 may include one or more candidate control resource sets.

The control resource set may be a physical transmission resource (for example, a frequency domain resource and/or a time domain resource), and the control resource set may be defined as a group of control resources under specified numerology (numerology). As an example but not a limitation, the numerology may include a subcarrier spacing and/or a cyclic prefix (Cyclic Prefix, CP) length of the system.

As an example but not a limitation, in this embodiment of the present invention, the candidate control resource set may include a plurality of resource elements (Resource Element, RE).

Alternatively, the candidate control resource set may include a plurality of resource element groups (Resource Element Group, REG).

Alternatively, the candidate control resource set may include a plurality of resource blocks (Resource Block, RB).

Alternatively, the candidate control resource set may include a plurality of control channel elements (Control Channel Element, CCE).

It should be understood that, elements (that is, control resources) that are exemplified above and that are included in the candidate control resource set are provided merely for illustrative description, and the present invention is not limited thereto. The elements included in the candidate control resource set may be arbitrarily defined or named by a person skilled in the art based on requirements.

A configuration manner of a candidate control resource set on a carrier is described below.

Without loss of generality, using the carrier #1 as an example, a configuration manner of a candidate control resource set on each carrier is described.

It should be noted that, a candidate control resource set on the carrier #1 may include at least one group of (two or more) candidate control resource sets having an overlap, where "one group of candidate control resource sets having an overlap" may refer to a plurality of (two or more) candidate control resource sets having one or more same control resources". In other words, "one group of candidate control resource sets having an overlap" may refer to a plurality of (two or more) candidate control resource sets whose intersection set is not an empty set.

In addition, a candidate control resource set on the carrier #1 may include at least one group of (two or more) candidate control resource sets having no overlap, where "one group of candidate control resource sets having no overlap" may refer to a plurality of (two or more) candidate control resource sets including control resources that are all different". In other words, "one group of candidate control resource sets having no overlap" may refer to a plurality of (two or more) candidate control resource sets whose intersection set is an empty set.

As an example but not a limitation, for example, in this embodiment of the present invention, a control resource for carrying control information is configured in each sub-band in the carrier #1.

Alternatively, in this embodiment of the present invention, a control resource for carrying control information is configured in each of some sub-bands (for example, one sub-band) in the carrier #1. Alternatively, a candidate control resource set is configured in some sub-bands in the carrier #1.

As an example but not a limitation, only one control resource set can be configured in one sub-band (which, for ease of understanding and distinction, is marked below as a sub-band #1) in the carrier #1.

Alternatively, a plurality of control resource sets may be configured in the sub-band #1. In addition, in this case, control resources of the plurality of control resource sets in the sub-band #1 may be the same or different. This is not particularly limited in the present invention.

In addition, as an example but not a limitation, for example, in this embodiment of the present invention, an entire candidate control resource set may be configured in the sub-band #1 of the carrier #1 (which, for ease of understanding and distinction, is marked below as a candidate control resource set #1). In other words, control resources in the candidate control resource set #1 all belong to the sub-band #1.

For another example, some control resources (which, for ease of understanding and distinction, is marked below as a control resource #1) in a candidate control resource set (which, for ease of understanding and distinction, is marked below as a candidate control resource set #2) may alternatively be configured in the sub-band #1 in the carrier #1. In other words, the control resource #1 in the candidate control resource set #2 belongs to the carrier #1. In addition, control resources of the candidate control resource set #2 other than the control resource #1 may belong to one or more sub-bands other than the carrier #1.

In this embodiment of the present invention, that one sub-band includes one or more candidate control resources may be explained as: the one or more candidate control resources occupy the sub-band, where the foregoing "occupy" may mean that the candidate resource set may include some sources in the "occupied" sub-band. In other words, only some resources in one sub-band belong to a candidate resource set that "occupies" the sub-band. Descriptions of same or similar cases are omitted below to avoid repetition.

To be specific, in this embodiment of the present invention, the K sub-bands may include P candidate control resource sets.

As stated above, the P candidate control resource sets may include at least two candidate resource sets whose intersection set is not an empty set. That is, the at least two candidate resource sets have an overlap (that is, including at least one same control resource).

Alternatively, the P candidate control resource sets may include at least two candidate resource sets whose intersection set is an empty set. That is, the at least two candidate resource sets have no overlap (that is, all control resources in the at least two candidate resource sets are different).

As an example but not a limitation, in this embodiment of the present invention, a value of P may be the same as a value of K. That is, the K sub-bands may include K candidate control resource sets.

In addition, as an example but not a limitation, in this case, the K sub-bands may be in one-to-one correspondence to the K candidate control resource sets. That is, each candidate control resource set may occupy a corresponding sub-band.

It should be understood that, the foregoing exemplified relationship between the K sub-bands and the K candidate control resource sets is merely provided for illustrative description, and the present invention is not limited thereto. For example, one or more candidate resource sets that occupy two or more sub-bands may alternatively exist in the K candidate resource sets.

In addition, it should be understood that the foregoing exemplified relationship between the value of P and the value of K is merely provided for illustrative description, and the present invention is not limited thereto. The value of P may alternatively be greater than or is less than the value of K.

In addition, in this embodiment of the present invention, frequency domain of control resources included in one candidate control resource set may be successive or non-successive. This is not particularly limited in the present invention.

As an example but not a limitation, in this embodiment of the present invention, that the device #1 detects the K sub-bands may mean that the device #1 contends for or monitors each sub-band in the K sub-bands, to determine a sub-band that is in K sub-bands and that can be used by the device #1. As an example but not a limitation, the "detection" may include clear channel assessment (Clear Channel Assessment), or the "detection" may include LBT.

It should be noted that, in this embodiment of the present invention, the device #1 may perform detection by using a sub-band as a unit. That is, in this embodiment of the present invention, the device #1 may detect whether one sub-band is usable.

Alternatively, in this embodiment of the present invention, the device #1 may perform detection by using a plurality of (at least two) sub-bands as a unit.

Alternatively, in this embodiment of the present invention, the device #1 may perform detection by using a single-carrier bandwidth as a unit.

As an example but not a limitation, in this embodiment of the present invention, the device #1 may perform the foregoing detection (in other words, contention or monitoring) based on an LBT manner. In addition, the process may be similar to that in the prior art. Herein, to avoid repetition, detailed descriptions of the process are omitted.

Therefore, in S210, the device #1 can determine, in the K sub-bands, M sub-bands that are used by the device #1, where M may be an integer greater than or equal to 1, and M may be less than or equal to K.

S220: The device #1 can determine a candidate control resource set #1 (that is, an example of a first candidate control resource set) in the foregoing P candidate control resource sets. The candidate control resource set #1 occupies S sub-bands in the M sub-bands, where S may be an integer greater than or equal to 1, and S may be less than or equal to M. That is, at least some control resources (for example, a control resource in the S sub-bands) in the candidate control resource#1 can be used by the device #1.

It should be noted that, when S is less than M, the device #1 may further determine the S sub-bands in the M sub-bands.

As an example but not a limitation, for example, in this embodiment of the present invention, the device #1 may sort the M sub-bands in ascending order of indexes, and determine first S sub-bands located on a head end as sub-bands occupied by the candidate control resource set #1. In other words, the device #1 may determine the candidate control resource set #1 in the first S sub-bands located on the head end. Similarly, the device #2 may determine the S sub-bands by using same sorting and selection rules. For example, as an example but not a limitation, without loss of generality, assuming that N=K=4, indexes of the N sub-bands of the device are sequentially 0, 1, 2, and 3, and S=2, indexes of the S sub-bands are 0 and 1.

For another example, in this embodiment of the present invention, the device #1 may sort the M sub-bands in ascending order of indexes, and determine last S sub-bands located on a tail end as sub-bands occupied by the candidate control resource set #A1. In other words, the device #1 may determine the candidate control resource set #1 in the first S sub-bands located on the rear end. Similarly, the device #2 may determine the S sub-bands by using same sorting and selection rules. For example, as an example but not a limitation, without loss of generality, assuming that N=K=4, indexes of the N sub-bands of the device are sequentially 0, 1, 2, and 3, and S=2, indexes of the S sub-bands are 3 and 4.

For another example, in this embodiment of the present invention, the device #1 may arbitrarily determine the S sub-bands, and notifies the device #2 of indication information of the S sub-bands (for example, indexes of the S sub-bands) through, for example, RRC signaling.

For another example, in this embodiment of the present invention, the communications system may specify the S sub-bands, for example, the communications system may specify a specific value of S, the communications system may specify a location of the S sub-bands in the M sub-bands, so that the device #1 and the device #2 can determine the S sub-bands based on the foregoing specifications of the communications system.

For another example, in this embodiment of the present invention, each sub-band may correspond to one cell identifier, so that the device #1 and the device #2 can use sub-bands corresponding to a cell identifier of a cell at which the device #1 and the device #2 are located as the S sub-bands. It should be noted that, in this embodiment of the present invention, one cell identifier may correspond to one sub-band, or one cell identifier may correspond to a plurality of sub-bands. This is not particularly limited in the present invention.

For another example, in this embodiment of the present invention, each sub-band may correspond to one terminal device identifier, so that the device #1 and the device #2 can use sub-bands corresponding to a terminal device identifier of a terminal device in the device #1 and the device #2 as the S sub-bands. It should be noted that, in this embodiment of the present invention, one terminal device identifier may correspond to one sub-band, or one terminal device identifier may correspond to a plurality of sub-bands. This is not particularly limited in the present invention.

For another example, in this embodiment of the present invention, the M sub-bands may have preset (for example, determined by the network device or specified by the communications system) priority levels, so that the device #1 and the device #2 may, based on the priority levels of the M sub-bands, for example, select S sub-bands in descending order of the priority levels.

In this embodiment of the present invention, because P candidate control resource sets are carried by K sub-bands, the candidate control resource set #1 selected in the P sub-bands not only is affected by the K sub-bands (that is, belongs to the K sub-bands), but also is affected by a sub-band that succeeds in LBT, that is, the candidate control resource set #1 belongs to a sub-band (for example, the foregoing M sub-bands) that succeeds in LBT and that is in the K sub-bands.

S230: The device #1 may send the control information to the device #2 on the candidate control resource set #1 (in other words, a control resource in at least one sub-band in the S sub-bands).

Therefore, the device #2 may receive the control information on the candidate control resource set #1, for example, in a blind detection manner.

Alternatively, in this embodiment of the present invention, the device #2 may further determine the foregoing M sub-bands that are determined by the device #1 and that succeed in LBT, and receive the control information in the M sub-bands in a blind detection manner.

As an example but not a limitation, the M sub-bands may be determined based on at least one of the following methods.

### Method a

In this embodiment of the present invention, the device #1 may send information #0 (that is, an example of first indication information) to the device #2.

As an example but not a limitation, for example, the information #0 may be used to indicate a quantity of the M sub-bands and a location of the M sub-bands.

For another example, the information #0 may be used to indicate a quantity and a location of sub-bands in the K sub-bands other than the M sub-bands.

Therefore, the terminal device can determine the M sub-bands based on the information #0.

As an example but not a limitation, when S is less than M, the information #0 may further be used to indicate a quantity and a location of the S sub-bands.

Alternatively, when S is less than M, the information #0 may further be used to indicate a quantity and a location of the S sub-bands.

As an example but not a limitation, in this embodiment of the present invention, the device #1 may send the information #0 to the device #2 through at least one sub-band in the M sub-bands.

The information #0 and the control information may be carried by different sub-bands.

Alternatively, in this embodiment of the present invention, the information #0 and the control information may be carried by a same sub-band.

It should be understood that, the resource that is exemplified above and that is used by the device #1 to send the information #0 to the device #2 is merely provided for illustrative description. This is not particularly limited in the present invention. For example, in this embodiment of the present invention, the communications system may be further provided with a preserved resource, and use of the preserved resource in transmission of data or control information is forbidden, in other words, the preserved resource may be used only for signaling transmission of the network device and the terminal device, so that the device #1 can send the information #0 to the device #2 through some or all resources in the preserved resources.

As an example but not a limitation, in this embodiment of the present invention, the foregoing preserved resource may be included in each sub-band, so that in this embodiment of the present invention, the device #1 can send the information #0 to the device #2 through the preserved resource in the M sub-bands.

As an example but not a limitation, a location of the preserved resource in each sub-band may be specified by the communications system, or a location of the preserved resource in each sub-band may be indicated by the network device to the terminal device, for example, through RRC signaling.

As an example but not a limitation, a size of the preserved resource may be specified by the communications system, or a size of the preserved resource may be indicated by the network device to the terminal device, for example, through RRC signaling.

As an example but not a limitation, the device #1 may send the information #0 to the device #2 in a form of bits or encoded bits.

Alternatively, the device #1 may add the information #0 into a reference signal and send it to the device #2.

Alternatively, the information #0 may be a preamble or a sequence that the device #1 and the device #2 can identify.

It should be understood that, the foregoing exemplified specific forms of the information #0 (that is, the first indication information) are provided merely for illustrative description. The present invention is not limited thereto. Other information forms that can enable the information #0 to complete a function of indicating a sub-band obtained by the device #1 through contention all fall within a protection scope of the embodiments of the present invention.

### Method b

The device #1 may send control information and a reference signal through the S sub-bands. For example, each sub-band in the S sub-bands carries a part of the control information and the reference signal.

Therefore, the device #2 can determine, by detecting the reference signal, sub-bands carrying the control information sent by the device #1 in the K sub-bands.

Optionally, that the device #2 determines the S sub-bands by detecting the reference signal may include: detecting, by the device #2, each sub-band in K sub-bands, determining whether the sub-band carries the reference signal, and determining sub-bands carrying the reference signal as sub-bands carrying the control information.

Further, the device #2 can parse the control information sent by the device #1 only in S sub-bands. This can reduce a processing load of the device #2. A method and a process through which the device #2 parses information based on the reference signal may be similar to the prior art. Herein, to avoid repetition, detailed descriptions of the method and process are omitted.

The control information transmission method in this embodiment of the present invention may be applied to transmission of downlink control information or transmission of uplink control information.

Applying the method of this embodiment of the present invention to a transmission process of downlink control information is described below in detail.

FIG. 3 schematically shows a processing process of a method 300 of transmitting control information #A (that is, an example of control information) between a network device #A (that is, an example of a first communications device) and a terminal device #A (that is, an example of a second communications device).

As shown in FIG. 3, S310: The network device #A performs channel detection on (in other words, contends for or monitors) K sub-bands (in other words, at least one sub-band in the K sub-bands) in a carrier #A (that is, an example of a first carrier), to determine a sub-band that can be used by the network device #A and that is in the K sub-bands.

Optionally, the carrier #A is a carrier through which the network device #A wirelessly communicates with (for example, transmits control information, data, or the like to) the terminal device #A. Optionally, the carrier #A is a carrier in an unlicensed spectrum. Optionally, the carrier #A is a carrier in a licensed spectrum.

Optionally, a bandwidth of the carrier #A may be greater than or equal to 20 MHz. For example, a bandwidth of the carrier #A may be 40 MHz, 80 MHz, 100 MHz, 2.16 GHz, or the like.

Optionally, the carrier #A may be divided into N sub-bands, where N is an integer greater than or equal to 2. For example, the bandwidth of the carrier #A is 80 MHz, and the carrier #A is divided into four sub-bands (that is, N=4), where a bandwidth of each sub-band is 20 MHz. For another example, the bandwidth of the carrier #A is 2.16 GHz, and the carrier #A is divided into five sub-bands (that is, N=5), where a bandwidth of each sub-band is 432 MHz.

Optionally, a bandwidth of each sub-band in the N sub-bands may be less than or equal to a bandwidth processed by the network device #A in one-time channel detection (for example, clear channel assessment (Clear Channel Assessment, CCA) detection) on an unlicensed spectrum. For example, the bandwidth processed by the network device #A in one-time channel detection (for example, CCA detection) on the unlicensed spectrum is 20 MHz, and a bandwidth of a sub-band in the N sub-bands is also 20 MHz.

Optionally, a bandwidth of each sub-band in the N sub-bands may be an integer multiple of a bandwidth processed by the network device #A in one-time channel detection (for example, CCA detection) on an unlicensed spectrum. For example, the bandwidth processed by the network device #A in one time of detection (for example, CCA detection) on the unlicensed spectrum is 20 MHz, and a bandwidth of a sub-band in the N sub-bands may be 40 MHz.

Optionally, the network device #A performs channel detection (for example, CCA detection) on K sub-bands in the carrier #A, where the K sub-bands are sub-bands that may be used by the network device #A to send control information to the terminal device #A, and K is a positive integer.

Optionally, the K sub-bands are determined by the network device #A and notified to the terminal device #A through signaling (for example, higher-layer signaling or physical-layer signaling).

Optionally, a quantity of the K sub-bands or a location of the K sub-bands in the carrier #A is specified by the communications system, so that the network device #A and the terminal device #A can determine the K sub-bands based on the specifications of the communications system.

Optionally, a quantity of the K sub-bands or a location of the K sub-bands in the carrier #A is predefined.

Optionally, a quantity of the K sub-bands or a location of the K sub-bands in the carrier #A is determined based on a cell identifier of a cell (which, for ease of understanding and description, is marked below as a cell #A) that is provided by the network device #A and at which the terminal device #A is located.

Optionally, a quantity of the K sub-bands or a location of the K sub-bands in the carrier #A is determined based on a terminal device identifier of the terminal device #A.

It should be noted that, the K sub-bands are K sub-bands in the N sub-bands. Optionally, K=N, that is, the K sub-bands are all sub-bands in the N sub-bands.

Optionally, K<N, that is, the K sub-bands are some sub-bands in the N sub-bands.

In this embodiment of the present invention, the K sub-bands may include P candidate control resource sets, where P is a positive integer.

Optionally, the P candidate control resource sets may include at least two candidate resource sets whose intersection set is not an empty set. That is, the at least two candidate resource sets have an overlap.

Optionally, the P candidate control resource sets may include at least two candidate resource sets whose intersection set is an empty set. That is, the at least two candidate resource sets have no overlap.

Optionally, each candidate control resource set in the P candidate control resource sets occupies at least one sub-band in the K sub-bands. For example, the K sub-bands are sub-bands 1, 2, and 3, P=3, one candidate control resource set in the three candidate control resource sets occupies the sub-bands 1 and 2, another candidate control resource set occupies the sub-bands 1 and 3, and the third candidate control resource set occupies the sub-band 2.

Optionally, the K sub-bands include P candidate control resource sets, where each sub-band in the K sub-bands includes a resource in the candidate control resource set. That is, any sub-band in the K sub-bands may be used by the network device #A to send control information to the terminal device #A. For example, the K sub-bands are sub-bands 1, 2, and 3, P=3, one candidate control resource set in the two candidate control resource sets occupies the sub-band 1, and the other candidate control resource set occupies the sub-bands 2 and 3.

Optionally, P=K, each candidate control resource set in the P candidate control resource sets occupies one sub-band in the K sub-bands, and the P candidate control resource sets and the K sub-bands are in one-to-one correspondence to each other. For example, the K sub-bands are sub-bands 1, 2, and 3, P=3, each candidate control resource set in the three candidate control resource sets occupies one of the three sub-bands, and in addition, one candidate control resource set in the three candidate control resource sets occupies the sub-band 1, another candidate control resource set occupies the sub-band 2, and the third candidate control resource set occupies the sub-band 2.

Optionally, the network device #A performs channel detection on the K sub-bands in the carrier #A, to determine that M sub-bands in the K sub-bands can be used by the network device #A, where M is a positive integer less than or equal to K.

Optionally, A method through which the network device #A performs channel detection on the carrier #A or sub-bands in the carrier #A is the same as or similar to the method through a network device or a terminal device performs channel detection on a carrier in an unlicensed spectrum in the prior art. Details are not described herein again.

It should be noted that, in this embodiment of the present invention, "occupying a sub-band" may indicate occupying some or all resources in a sub-band. For example, that "each candidate control resource set in the P candidate control resource sets occupies a sub-band in the K sub-bands" may indicate that resources included in each candidate control resource set in the P candidate control resource sets is located in one sub-band in the K sub-bands, or resources included in each candidate control resource set in the P candidate control resource sets occupy some resources in one sub-band in the K sub-bands, or resources included in each candidate control resource set in the P candidate control resource sets occupy all resources in one sub-band in the K sub-bands. Descriptions of same or similar cases are omitted below to avoid repetition.

It should be further noted that, a location of the candidate control resource set in a time domain may be specified by a communications system, or may be notified by the network device #A to the terminal device #A through signaling (for example, higher-layer signaling or physical-layer signaling), or may be preset, or may be determined by the network device #A and the terminal device #A in another manner. This is not limited in the present invention.

It should be further noted that, the candidate control resource set may include one or more resource element groups (Resource Element Group, REG; where one REG includes an integral quantity of REs), or the candidate control resource set may include the one or more resource blocks (Resource Block, RB), or the candidate control resource set may include one or more resource block groups (Resource Block Set, RB set; where one RB set includes an integral quantity of RBs), or the candidate control resource set may include one or more control channel elements (Control Channel Element, CCE).

It should be understood that, the foregoing exemplified resources included in the candidate control resource set are merely provided for illustrative description, and the present invention is not limited thereto. The candidate control resource set may include a resource set in another form. In this embodiment of the present invention, for ease of description, descriptions are provided by using an example in which the candidate control resource set includes an integral quantity of CCEs.

S320: The network device #A can determine a candidate control resource set #A (that is, an example of a first candidate control resource set) in the foregoing P candidate control resource sets based on a result of the channel detection. The candidate control resource set #A occupies S sub-bands in the M sub-bands, where S may be an integer greater than or equal to 1, and S may be less than or equal to M.

Optionally, the candidate control resource set #A includes one or more candidate control resource sets in the P candidate control resource sets.

Optionally, the candidate control resource set #A occupies S sub-bands in the M sub-bands, which may be that the candidate control resource set #A includes one candidate control resource set in the P candidate control resource sets, and the candidate control resource set occupies S sub-bands in the M sub-bands.

Optionally, P=K, each candidate control resource set in the P candidate control resource sets occupies one sub-band in the K sub-bands, the P candidate control resource sets are in one-to-one correspondence to the K sub-bands, and the candidate control resource set #A occupies S sub-bands in the M sub-bands, which may be that the candidate control resource set #A includes S candidate control resource sets in the P candidate control resource sets, where the S candidate control resource set are in one-to-one correspondence to the S sub-bands.

Optionally, when S is less than M, the network device #A may further determine the S sub-bands in the M sub-bands.

Optionally, the S sub-bands are S sub-bands located on a tail end of the M sub-bands arranged in ascending order of index numbers. For example, the network device #A determines, through channel detection, that a quantity of usable sub-bands is M=3, indexes of the M sub-bands are 0, 2, and 3, and if S=2, the S sub-bands are a sub-band 2 and a sub-band 3 (that is, S sub-bands located on a tail end of the M sub-bands arranged in ascending order of index numbers). That is, the candidate control resource set #A occupies resources in the sub-band 2 and the sub-band 3.

Optionally, the S sub-bands are S sub-bands located on a head end of the M sub-bands arranged in ascending order of index numbers. For example, the network device #A determines, through channel detection, that a quantity of usable sub-bands is M=3, indexes of the M sub-bands are 0, 2, and 3, and if S=2, the S sub-bands are a sub-band 0 and a sub-band 2 (that is, S sub-bands located on a head end of the M sub-bands arranged in ascending order of index numbers). That is, the candidate control resource set #A occupies resources in the sub-band 0 and the sub-band 2.

Optionally, the S sub-bands are sub-bands preset by the network device #A, or the S sub-bands are sub-bands specified by the communications system. For example, the carrier #A includes four sub-bands (N=4), indexes of the four sub-bands are 0, 1, 2, and 3, and K=N=4. That is, each sub-band in the K sub-bands may include a resource used by the network device #A to send control information to the terminal device #A. S=1, and priority levels of resources that are in the sub-band and that are used to transmit the control information are divided based on different indexes of sub-bands. For example, priority levels of the indexes are 0, 2, 1, and 3. When M sub-bands that are in the four sub-bands and that can be used for channel detection include a sub-band 0, the S sub-bands specifically refer to the sub-band 0; When M sub-bands that are in the four sub-bands and that can be used for channel detection include a sub-band 2 and do not include a sub-band 0, the S sub-bands specifically refer to the sub-band 2. When M sub-bands that are in the four sub-bands and that can be used for channel detection include a sub-band 1 and do not include sub-bands 0 and 2, the S sub-bands specifically refer to the sub-band 1. When M sub-bands that are in the four sub-bands and that can be used by the network device #A through channel detection include a sub-band 3 and do not include sub-bands 0, 2, and 1, the S sub-bands specifically refer to the sub-band 3.

Optionally, the S sub-bands are sub-bands specified by the communications system. For example, the communications system may specify a specific value of S, or the communications system may specify a location of the S sub-bands in the M sub-bands, so that the network device #A and the terminal device #A can determine the S sub-bands based on the foregoing specifications of the communications system.

Optionally, the S sub-bands are sub-bands determined based on a cell identifier, where the cell is a cell at which the network device #A and the terminal device #A are located. For example, the S sub-bands are determined based on the cell identifier, or a sub-band that is in the S sub-bands and that has a minimum or maximum index has a mapping relationship with the cell identifier. For example, the S sub-bands or the sub-band that is in the S sub-bands and that has a minimum or maximum index are or is determined based on a remainder after N or K modulo the cell identifier. It should be noted that, in this embodiment of the present invention, one cell identifier may be used to determine one sub-band, or one cell identifier may be used to determine a plurality of sub-bands. This is not particularly limited in the present invention.

Optionally, the S sub-bands are sub-bands determined based on an identifier of the terminal device #A. For example, the S sub-bands are determined based on the identifier of the terminal device #A, or a sub-band that is in the S sub-bands and that has a minimum or maximum index has a mapping relationship with the identifier of the terminal device #A. For example, the S sub-bands or the sub-band that is in the S sub-bands and that has a minimum or maximum index are or is determined based on a remainder after N or K or M modulo the identifier of the terminal device #A.It should be noted that, in this embodiment of the present invention, an identifier of one terminal device #A may be used to determine one sub-band, or an identifier of one terminal device #A may be used to determine a plurality of sub-bands. This is not particularly limited in the present invention.

Optionally, the S sub-bands are determined by the network device #A and notified to the terminal device #A through signaling (for example, higher-layer signaling or physical-layer signaling). The network device #A may notify the terminal device #A of indication information of the S sub-bands (for example, indexes of the S sub-bands, a specific value of S, or a location of the S sub-bands in the M sub-bands) through, for example, RRC signaling.

Optionally, the M sub-bands may have preset (for example, determined by the network device #A or specified by the communications system) priority levels, so that the network device #A and the terminal device #A may, based on the priority levels of the M sub-bands, for example, select S sub-bands in descending order of priority levels.

Optionally, the terminal device #A needs to determine the network device #A M sub-bands that can be used by the terminal device #A through the channel detection, so that the terminal device #A may determine, based on the M sub-bands, S sub-bands occupied by the candidate control resource set #A.

Optionally, the M sub-bands are notified by the network device #A to the terminal device #A through indication information #A (that is, an example of first indication information). For example, the indication information #A may be used to indicate a quantity of the M sub-bands, or a location of the M sub-bands in the K sub-bands, or a location of the M sub-bands in the N sub-bands. For another example, the information #A may be used to indicate a quantity and a location of sub-bands in the K sub-bands other than the M sub-bands.

Therefore, the terminal device can determine the M sub-bands based on the indication information #A.

Optionally, the indication information #A may alternatively indicate the S sub-bands. For example, the indication information #A may indicate a quantity of the S sub-bands, or a location of the S sub-bands in the M sub-bands, or a location of the S sub-bands in the K sub-bands, or a location of the S sub-bands in the N sub-bands. For another example, the information #A may be used to indicate a quantity and a location of sub-bands in the M sub-bands other than the S sub-bands.

Optionally, the network device #A may send the indication information #A to the terminal device #A through at least one sub-band in the M sub-bands.

Optionally, the indication information #A and the control information #A may be carried by different sub-bands, or the indication information #A or the control information #A may be carried by a same sub-band.

Optionally, the network device #A may send the indication information #A to the terminal device #A through each sub-band in the M sub-bands. Further optionally, the indication information #A is repeatedly sent in each sub-band in the M sub-bands.

It should be understood that, the resource that is exemplified above and that is used by the network device #A to send the indication information #A to the terminal device #A is merely provided for illustrative description. This is not particularly limited in the present invention. For example, in this embodiment of the present invention, the communications system may be further provided with a preserved resource, and use of the preserved resource in transmission of data is forbidden, in other words, the preserved resource may be used only for transmission of the indication #A, so that the network device #A can send the indication information #A to the terminal device #A through some or all resources in the preserved resource.

Optionally, each sub-band in the N sub-bands included in the carrier #A may include the foregoing preserved resource, so that the network device #A can send the indication information #A to the terminal device #A through the preserved resource in the M sub-bands.

Optionally, each sub-band in the K sub-bands may include the foregoing preserved resource, so that the network device #A can send the indication information #A to the terminal device #A through the preserved resource in the M sub-bands.

Optionally, a location of the preserved resource in each sub-band may be specified by the communications system, or a location of the preserved resource in each sub-band may be indicated by the network device to the terminal device #A through signaling, for example, RRC signaling.

Optionally, a size of the preserved resource may be specified by the communications system, or a size of the preserved resource may be indicated by the network device to the terminal device #A through signaling, for example, RRC signaling.

Optionally, the network device #A may encode or modulate an information bit included in the indication information #A, then map the information bit onto the preserved resource, and send the information bit to the terminal device #A.

Optionally, the network device #A may add information included in the indication information #A to a reference signal (for example, a predefined sequence or preamble) and send the reference signal to the terminal device #A.

Optionally, the indication information #A is common signaling. That is, the network device #A sends the indication information #A to at least two terminal devices that are served by the network device #A and that include the terminal device #A.

It should be understood that, the foregoing exemplified specific forms of the indication information #A (that is, the first indication information) are provided merely for illustrative description. The present invention is not limited thereto. Other information forms that can enable indication the information #A to complete a function of indicating a sub-band obtained by the network device #A through contention all fall within a protection scope of the embodiments of the present invention.

Optionally, the M sub-bands are determined by the terminal device #A by detecting a reference signal.

Optionally, the network device #A may send control information and a reference signal through the S sub-bands. For example, each sub-band in the S sub-bands carries a part of the control information and the reference signal. Therefore, the terminal device #A can determine, by detecting the reference signal, sub-bands carrying the control information sent by the network device #A in the K sub-bands.

Optionally, that the terminal device #A determines the S sub-bands based by detecting the reference signal may include: detecting, by the terminal device #A, each sub-band in K sub-bands, determining whether the sub-band carries the reference signal, and determining sub-bands carrying the reference signal as sub-bands carrying the control information. Further, the terminal device #A may detect, in the S sub-bands, the control information sent by the network device #A.

Optionally, the network device #A may send a reference signal through the M sub-bands. For example, each sub-band in the M sub-bands carries the reference signal. Therefore, the terminal device #A can determine, by detecting each sub-band in the K sub-bands, whether the sub-band carries the reference signal, to further determine whether the M sub-bands in the K sub-bands are sub-bands that succeed in LBT of the network device.

Further optionally, a method through the terminal device #A determines the S sub-bands in the M sub-bands may be the same as the foregoing described method of determining the S sub-bands in the M sub-bands. Details are not described herein again.

Optionally, the reference signal sent by the network device #A may be a reference signal used to demodulate control information, or a reference signal used to demodulate data information, or a reference signal specially used to indicate whether the network device #A succeeds in LBT in each sub-band.

Optionally, the reference signal may be a terminal device #A-specific reference signal that is sent only to the terminal device #A, or a common reference signal that is sent to at least two terminal devices including the terminal device #A.

It should be noted that, a method and a process through which the terminal device #A detects whether a sub-band carries a reference signal may be similar to the prior art. Herein, to avoid repetition, detailed descriptions of the method and process are omitted.

S330: The network device #A may determine the candidate control resource set #A in the P candidate control resource sets in the M sub-bands having an LTB success.

In this embodiment of the present invention, the candidate control resource set #A may occupy one sub-band in the M sub-bands (that is, a solution 1) or may occupy a plurality of sub-bands in the M sub-bands (that is, a solution 2). Before the two solutions are described in detail, a search space is described below.

Optionally, a size of the search space may include an integral quantity of CCEs.

Optionally, the search space may have a mapping relationship with the candidate control resource set.

Optionally, the mapping relationship between the search space and the candidate control resource set is a one-to-one relationship (which, for ease of understanding and description, is marked below as a mapping relationship #1). For example, one candidate control resource set corresponds to one search space, where optionally, a quantity of CCEs included in the search space is less than or equal to a quantity of CCEs included in the corresponding candidate control resource set.

Optionally, the mapping relationship between the search space and the candidate control resource set is a one-to-many relationship.

For example, one candidate control resource set includes a plurality of search spaces (which, for ease of understanding and description, is marked below as a mapping relationship #2), where CCEs in candidate control resource sets respectively corresponding to two search spaces in the plurality of search spaces may be completely the same, partially the same, or completely different.

For another example, one search space corresponds to a plurality of candidate control resource sets (which, for ease of understanding and description, is marked below as a mapping relationship #3), and the plurality of the candidate control resource sets may occupy one or more sub-bands, where optionally, a quantity of CCEs included in the search space is less than or equal to a total quantity of CCEs included in the plurality of candidate control resource sets corresponding to the search space. A quantity of CCEs included in the search space is greater than or equal to a total quantity of CCEs included in one candidate control resource set in the corresponding plurality of candidate control resource sets.

Optionally, one search space may include one or more aggregation levels (Aggregation Level, AL), where a value of an AL may represent a quantity of CCEs occupied by the AL (in other words, a control channel corresponding to the AL). For example, assuming that Q is used to represent an aggregation level, a control channel whose AL is Q may be transmitted through Q CCEs. A value of Q is a positive integer. For example, the value of Q may be one of 1, 2, 4, 8, and the like. The value of Q may alternatively be another value. This is not limited in the present invention.

Optionally, one search space includes one or more ALs, where each AL corresponds to a candidate quantity of detection times (or each AL includes one or more candidate control channels detected by using the AL). A candidate quantity of detection times corresponding to each AL may be predefined, specified by the communications system, or indicated by the network device #A to the terminal device #A in advance, and so on. This is not limited in the present invention.

Optionally, in a search space, the terminal device #A may determine a location of a CCE corresponding to one time of candidate detection.

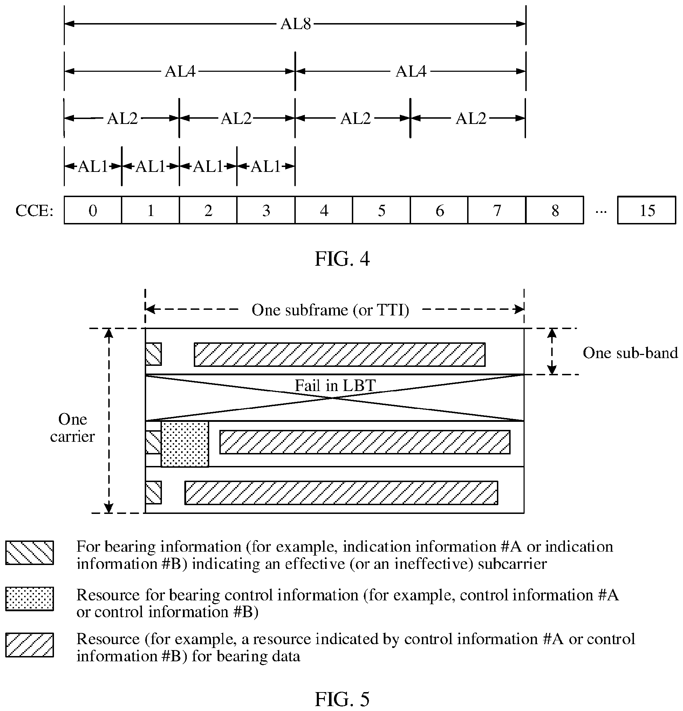

FIG. 4 shows an example of a mapping relationship between a candidate control resource set and a search space. As shown in FIG. 4, the candidate control resource set includes 16 CCEs, and the search space on the candidate control resource set includes 8 CCEs, and corresponds to CCE0 to CCE7 in the control resource set.

In a schematic diagram shown in FIG. 4, it may be considered that one candidate control resource set corresponds to one search space. The search space has four aggregation levels: AL1=1, AL2=2, AL4=4, and AL8=8.

For AL1, there are four candidate control channels that respectively occupy CCE0, CCE1, CCE2, or CCE3. It should be understood that, the foregoing exemplified quantity of candidate control channels of AL1 is provided merely for illustrative description, and this embodiment of the present invention is not limited thereto. For example, a quantity of candidate control channels of AL1 as shown in FIG. 4 may be a quantity (for example, 8) other than 8, or a CCE occupied by the candidate control channels of AL1 may be a CCE (for example, CCE4, CCE5, CCE6, or CCE7) other than CCE0, CCE1, CCE2, and CCE3.

For AL2, there are four candidate control channels that respectively occupy CCE0 and CCE1, CCE2 and CCE3, CCE4 and CCE5, or CCE6 and CCE7.

For AL4, there are two candidate control channels that occupy CCE0, CCE1, CCE2, and CCE3 or occupy CCE4, CCE5, CCE6, and CCE7.

For AL8, there is one candidate control channel that occupies CCE0 to CCE7.

As shown in FIG. 4, a total quantity of candidate control channels of the search space is 4+4+2+1=11.

In the schematic diagram shown in FIG. 4, it may alternatively be considered that, one candidate control resource set corresponds to a plurality of search spaces. For example, it may be considered that, the candidate control resource set corresponds to a search space 1 and a search space 2, where the search space 1 has two aggregation levels: AL1=1 and AL2=2, and the search space 2 has two aggregation levels: AL4=4 and AL8=8.

For AL1, there are four candidate control channels that respectively occupy CCE0, CCE1, CCE2, or CCE3. It should be understood that, the foregoing exemplified quantity of candidate control channels of AL1 is provided merely for illustrative description, and this embodiment of the present invention is not limited thereto. For example, a quantity of candidate control channels of AL1 as shown in FIG. 4 may be a quantity (for example, 8) other than 8, or a CCE occupied by the candidate control channels of AL1 may be a CCE (for example, CCE4, CCE5, CCE6, or CCE7) other than CCE0, CCE1, CCE2, and CCE3.

For AL2, there are four candidate control channels that respectively occupy CCE0 and CCE1, CCE2 and CCE3, CCE4 and CCE5, or CCE6 and CCE7.

For AL4, there are two candidate control channels that occupy CCE0, CCE1, CCE2, and CCE3 or occupy CCE4, CCE5, CCE6, and CCE7.

For AL8, there is one candidate control channel that occupies CCE0 to CCE7.

As shown in FIG. 4, a total quantity of candidate control channels of the search space 1 is 4+4=8, and a total quantity of candidate control channels of the search space 2 is 2+1=3.

As an example but not a limitation, in this embodiment of the present invention, quantities of candidate control channels corresponding to a plurality of search spaces of the terminal device #A (for example, used in different cases) may be the same.

For example, quantities of candidate control channels of all aggregation levels in the plurality of search spaces of the terminal device #A may be the same.

Alternatively, total quantities of candidate control channels corresponding to the plurality of search spaces of the terminal device #A may be the same.

As an example but not a limitation, in this embodiment of the present invention, the plurality of search spaces of the terminal device #A may include a common search space and a specific search space of the terminal device #A.

Different terminal devices may share the common search space, and different terminal devices may have different specific search spaces.

In addition, in this embodiment of the present invention, aggregation levels corresponding to different search spaces may be the same or different. This is not particularly limited in the present invention. In this embodiment of the present invention, without loss of generality, description is provided by using an example in which the candidate control resource set #A corresponds to the search space #A.

### Solution 1 (S=1)

As stated above, in the solution 1, the network device #A sends control information to the terminal device #A by using only one sub-band in the M sub-bands.

With regard to this, in the solution 1, each candidate control resource set in the P candidate control resource sets occupies one sub-band in the K sub-bands.

In addition, the P candidate control resource sets may be in one-to-one correspondence to the K sub-bands. That is, each candidate control resource set occupies only a corresponding sub-band.

In this case, the candidate control resource set #A occupies one sub-band in the M sub-bands.

As an example but not a limitation, that "the candidate control resource set #A occupies one sub-band in the M sub-bands" may mean that although the network device #A obtains a plurality of sub-bands through contention, the network device #A selects only a candidate control resource set in one sub-band as the candidate control resource set #A.

Alternatively, that "the candidate control resource set #A occupies one sub-band in the M sub-bands" may mean that the network device #A obtains only one sub-band through contention, so that the network device #A uses the one candidate control resource set obtained through contention as the candidate control resource set #A.

It should be noted that, in the solution 1, a correspondence between the candidate control resource set and the search space may be the foregoing mapping relationship #1 or mapping relationship #2. That is, a mapping relationship between the search spaces and the candidate control resources set may be a one-to-one mapping relationship or a one-to-many mapping relationship.

That is, in the solution, mapping of one search space can be completed in one sub-band.

In other words, in the solution 1, a size (in other words, a quantity of included resources (for example, CCEs)) of a candidate control resource set in each sub-band may be greater than or is equal to a quantity of CCEs corresponding to one search space.

In other words, in the solution 1, a size (in other words, a quantity of included resources (for example, CCEs)) of a candidate control resource set in each sub-band can satisfy a quantity of searches corresponding to one search space.

Optionally, sizes of candidate control resource sets in all sub-bands may be the same. For example, quantities of resources (for example, CCEs) included in candidate control resource sets in all sub-bands may be the same.

Alternatively, candidate control resource sets in different sub-bands may be different, but sizes (in other words, quantities of searches) of search spaces corresponding to the candidate control resource sets in all the sub-bands are the same.

Alternatively, candidate control resource sets in different sub-bands may be the same, and sizes (in other words, quantities of searches) of search spaces corresponding to the candidate control resource sets in all the sub-bands are the same.

That is, in the solution 1, each candidate control resource set in the P candidate control resource sets occupies one sub-band, and a size of each candidate control resource set in the P candidate control resource sets can satisfy a requirement of a relevant parameter (for example, a size of a search space or a quantity of searches corresponding to a search space) of the search space #A.

It should be noted that, in an existing data transmission process in an unlicensed spectrum, a scheduling decision of the network device #A cannot be changed. That is, the network device #A may prepare a quantity of scheduled terminal devices (including the terminal device #A) and a size of a packet of each terminal device in advance. Because a size of a packet is determined based on a quantity of resources allocated by the network device #A to the terminal device and a modulation and coding scheme MCS indicated by the network device #A, a size of a resource allocated by the network device #A cannot be changed. However, in a scenario in which the network device #A schedules a terminal device to perform broadband transmission, and the terminal device succeeds in LBT (in other words, channel detection is usable) in only some sub-bands, the network device #A may perform rate matching of data based on an actually occupied channel resource. That is, from the perspective of the system, because a relationship between control channels of different terminal devices affects a scheduling decision, in a process of narrowing down a transmission bandwidth, a mutual relationship between control channels of scheduled terminal devices in the system cannot be changed. Therefore, in this embodiment, optionally, a search space of the network device #A in each sub-band is configured based on a maximum search space.

Optionally, in this embodiment of the present invention, when the network device #A succeeds in LBT in a plurality of sub-bands, one sub-band is selected in the sub-bands that succeed, and control channel is sent to the terminal device through a candidate control resource set in the sub-band.

Optionally, the sub-band used to send a control channel may be predefined. For example, the sub-band used to carry a control channel may be a sub-band having a smallest number (in other words, index number) in sub-bands that succeed in LBT. For another example, the sub-band used to carry a control channel may be a sub-band having a largest number in sub-bands that succeed in LBT.

For example, the network device #A may send, to the terminal device #A, information (that is, an example of first indication information) used to indicate a sub-band that succeeds in LBT.

For another example, the network device #A may send, to the terminal device #A, information (that is, another example of first indication information) that indicates the candidate control resource set #A (in other words, a sub-band occupied by the candidate control resource set #A).

For another example, the terminal device #A may perform blind detection on a reference signal in K sub-bands that the candidate control resource set #A to determine information of a sub-band in which the network device #A succeeds in LBT.

Therefore, the terminal device #A may determine, based on the first indication information or information of a sub-band in which the network device #A succeeds in LBT, a sub-band used to carry a control channel, to further determine the candidate control resource set #A.

In addition, the terminal device #A may perform blind detection on the candidate control resource set #A (or a sub-band occupied by the candidate control resource set #A) to obtain control information #A.

Because UE needs to perform blind detection on only one sub-band, a blind detection capacity of the UE is not increased in the control channel transmission method.

For example, when FIG. 5 shows a location of a resource corresponding to a control channel (for example, a downlink control channel) used to carry control information #A on the carrier #A in a case #A. As shown in FIG. 5, the network device #A may send, in each sub-band in the M sub-bands that succeed in LBT in the K sub-bands, indication information (for example, the indication information #A) used to indicate a contention success of the M sub-bands. In addition, the network device #A may send the control information #A in one (that is, S=1) sub-band in the M sub-bands. That is, in the solution 1, the candidate control resource set #A is located in one sub-band that succeeds in LBT.

It should be noted that, although not shown in FIG. 5, a time frequency resource used to carry indication information indicating whether the sub-band succeeds may be configured in each sub-band having an LBT failure in the K sub-bands. In a case of an LBT failure, the time frequency resource is not successfully obtained by the network device #A through contention. Therefore, the network device #A does not send information on the time frequency resource.

### Solution 2 (that is, M≥S≥1)

As stated above, in the solution 2, the network device #A may send control information to the terminal device #A by using one or more sub-bands in the M sub-bands.

In addition, in the solution 2, each candidate control resource set in the P candidate control resource sets occupies one sub-band in the K sub-bands (that is, a solution 2A), or some candidate control resource sets in the P candidate control resource sets occupies a plurality of sub-bands in the K sub-bands (that is, a solution 2B). The foregoing two cases are separately described below in detail.

### Solution 2A

In this embodiment of the present invention, a size (in other words, a quantity of included resources (for example, CCEs)) of each candidate control resource set in the P candidate control resource sets may be less than or equal to a size of one search space.

Therefore, the network device #A may determine, based on a size of a search space of the terminal device #A and a size of each candidate control resource set in the M sub-bands, a candidate control resource set #A that needs to be used, to enable the candidate control resource set #A to satisfy a requirement for the search space of the terminal device #A.

In addition, in this case, the candidate control resource set #A may include one candidate control resource set, or the candidate control resource set #A may alternatively include a plurality of candidate control resource sets. This is not particularly limited in the present invention.

Optionally, sizes of all candidate control resource sets in the P candidate control resource sets may be the same. In other words, candidate control resource sets in all sub-bands in the M sub-bands may be the same.

Alternatively, relevant parameters (for example, a size of a search space or a quantity of searches corresponding to a search space) of search spaces corresponding to all candidate control resource sets in the P candidate control resource sets may be the same. In other words, relevant parameters (for example, a size of a search space or a quantity of searches corresponding to a search space) of search spaces corresponding to candidate control resource sets in S sub-bands in the M sub-bands may be the same.

That is, in the solution 2A, each candidate control resource set in the P candidate control resource sets occupies one sub-band.

In addition, as an example but not a limitation, a sum of sizes of a plurality of candidate control resource sets #A may satisfy a requirement of a relevant parameter (for example, a size of a search space or a quantity of searches corresponding to a search space) of a search space #A.

Alternatively, a sum of sizes of a plurality of candidate control resource sets #A may not satisfy a requirement of a relevant parameter (for example, a size of a search space or a quantity of searches corresponding to a search space) of a search space #A. In this case, the terminal device #A may detect partial search space in the search space #A.

### Solution 2B

Specifically, in this embodiment of the present invention, each candidate control resource set in the P candidate control resource sets occupies a plurality of (two or more) sub-bands in the K sub-bands.

As an example but not a limitation, in this embodiment of the present invention, there are two or more candidate control resource sets occupying different quantities of sub-bands in the P candidate control resource sets. For example, one or more candidate control resource sets in the P candidate control resource sets may occupy one sub-band, one or more other candidate control resource sets in the P candidate control resource sets may occupy two sub-bands, and one or more still other candidate control resource sets in the P candidate control resource sets may occupy L sub-bands, where L may be an integer that is greater than or equal to 2 and that is less than or equal to M.

Therefore, the network device #A may determine, based on a size of a search space of the terminal device #A and a size of each candidate control resource set, a candidate control resource set #A that needs to be used, to enable the candidate control resource set #A to satisfy a requirement for the search space of the terminal device #A.

In this case, the candidate control resource set #A may include one candidate control resource set.

Optionally, sizes of all candidate control resource sets in the P candidate control resource sets may be the same, that is, for any two candidate control resource sets occupying different quantities of sub-bands, sizes of the any two candidate control resource sets occupying different quantities of sub-bands may be the same.

Optionally, for any two candidate control resource sets occupying different quantities of sub-bands, relevant parameters (for example, a size of a search space or a quantity of searches corresponding to a search space) of search spaces corresponding to the candidate control resource sets may be the same.

That is, in the solution 2B, there may be a candidate control resource set occupying a plurality of sub-bands in the P candidate control resource sets.

For example, the candidate control resource set #A may occupy a plurality of sub-bands, and a size of the candidate control resource set #A can satisfy a requirement for a relevant parameter (for example, a size of a search space or a quantity of searches corresponding to a search space) of the search space #A.

Alternatively, a sum of sizes of a plurality of candidate control resource sets #A may not satisfy a requirement of a relevant parameter (for example, a size of a search space or a quantity of searches corresponding to a search space) of a search space #A. In this case, the terminal device #A may detect partial search space in the search space #A.

As an example but not a limitation, in the solution 2, for example, when there are S sub-bands that have an LTB success, there are S types of configuration of a search space of the UE. In each case, a size of the search space in a sub-band is related to a value of S. Description is provided by using an example in which a search space of UE is normalized to 1 (or a quantity of searches corresponding to the search space of the UE is normalized to 1). When the system includes four effective (that is, succeed in LBT) sub-bands, a size of the search space of the UE that can be configured in each sub-band is 1/4. When the system includes three effective sub-bands, a size of the search space of the UE that can be configured in each sub-band is 1/3, or a size of the search space of the UE configured in the first effective sub-band (for example, an effective sub-band having a smallest number) is 1/2, and sizes of the search spaces of the UE configured in the remaining two effective sub-bands are 1/4. When the system includes two effective sub-bands, a size of the search space of the UE that can be configured in each sub-band is 1/2. When the system includes one effective sub-band, the search space of the UE is completely configured in the sub-band.

As an example but not a limitation, in the solution 2, when there are S sub-bands that have an LTB success, a quantity of types of configuration of a search space of the UE is less than N. In each case, a size of the search space in a sub-band is related to a value of N. Likewise, description is provided by using an example in which a search space of UE is normalized to 1 (or a quantity of searches corresponding to the search space of the UE is normalized to 1). When the system includes four or more effective sub-bands, the search space of the UE is configured in four effective sub-bands, and a size of the search space of the UE in each sub-band is 1/4. When the system includes effective sub-bands whose quantity is greater than or equal to two, but is less than 4, the search space of the UE is configured in two effective sub-bands, and a size of the search space of the UE in each sub-band is 1/2. When the system includes one effective sub-band, the search space of the UE is completely configured in the sub-band.

It should be noted that, configuration of the search space under different quantities of effective sub-bands is predefined or configured by a base station through high-layer signaling.

Optionally, in the solution, a scheduling decision of a base station cannot be changed either. That is, the base station can prepare a quantity of scheduled users and a packet size of each user in advance. Because the packet size is determined based on a quantity of resources allocated by the base station to the UE and a modulation and coding scheme MCS indicated by the base station, a size of a resource allocated by the base station cannot be changed. In a scenario in which the base station schedules UE to perform broadband transmission, and the UE succeeds in LBT in only some sub-bands, and the base station may perform rate matching of a control channel based on an actually occupied channel resource. That is, from the perspective of the system, because a relationship between control channels of different UEs affects a scheduling decision, in a process of narrowing down a transmission bandwidth, a mutual relationship between control channels of scheduled UEs in the system cannot be changed. That is, a mutual relationship between resources that are allocated by the base station and that are used to transmit a PDCCH of UE (that is a relative relationship between virtual CCEs) cannot be changed either.

From the prospective of the UE, the UE needs to first receive indication information of the base station to determine an effective bandwidth of the system, and then, with reference to higher-layer or pre-defined configuration information of a search space, determine a location of the search space of the UE, to perform blind detection on the PDCCH. Because a sum of search spaces in all effective bandwidths is a maximum search space, a blind detection capacity of the UE is not increased.

When a load of the system is relatively large, a control channel is distributed in a plurality of effective sub-bands, so that fewer symbols are occupied in a time domain. This is advantageous to rapid demodulation of the control channel.

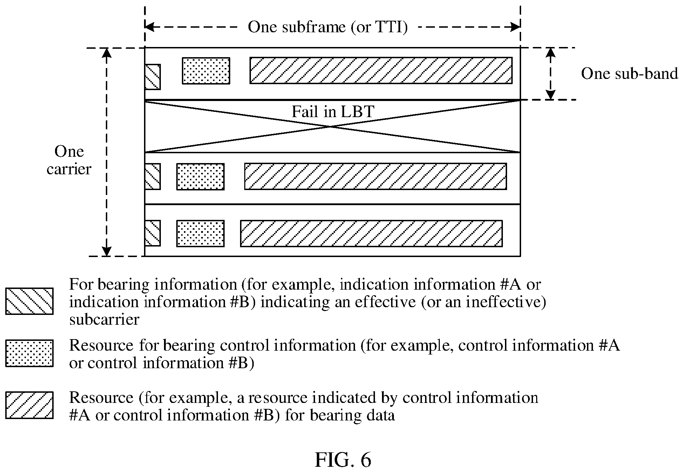

For example, FIG. 6 shows an example of a location of a resource corresponding to a control channel (for example, a downlink control channel) configured to carry the control information #A in the carrier #A during the solution 2. In FIG. 6, quantities of resources that are included in all sub-bands that succeed in LTB and that are used to carry the control information #A (in other words, quantities of control resources of the candidate control resource set #A distributed on all the sub-bands that succeed in LTB) are the same.

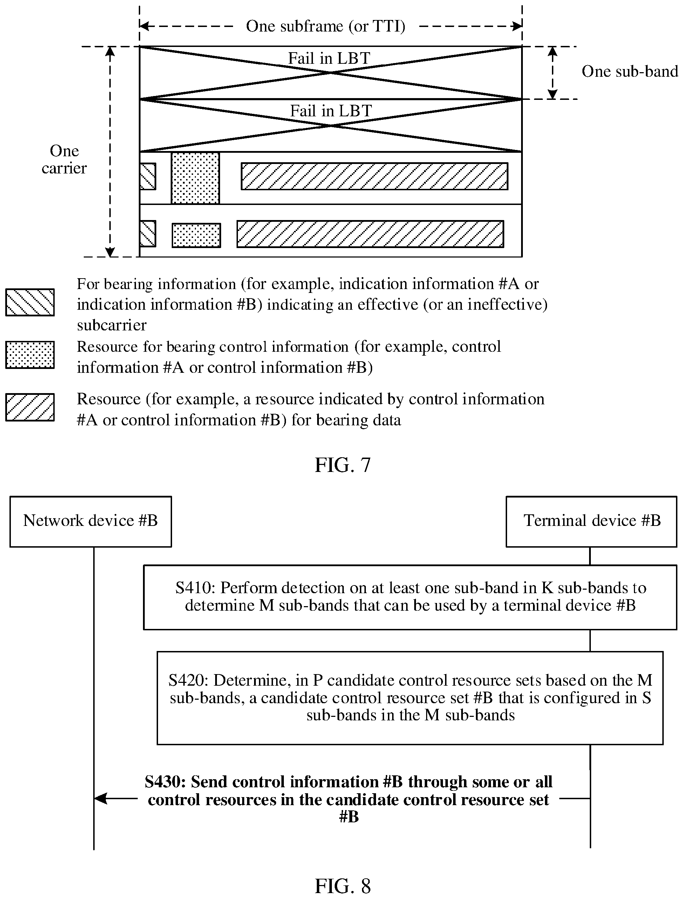

For example, FIG. 7 shows another example of a location of a resource corresponding to a control channel (for example, a downlink control channel) configured to carry the control information #A in the carrier #A during the solution 2. In FIG. 7, quantities of resources that are included in different sub-bands that succeed in LTB and that are used to carry the control information #A (in other words, quantities of control resources of the candidate control resource set #A distributed on different sub-bands that succeed in LTB) are different.

It should be noted that, although not shown in FIG. 6 and FIG. 7, a time frequency resource used to carry indication information indicating whether the sub-band succeeds may be configured in each sub-band that fails in LBT in the K sub-bands. In a case of a failure in LBT, the time frequency resource is not successfully obtained by the network device #A through contention. Therefore, the network device #A does not send information on the time frequency resource.

S330: The network device #A may send the control information #A to the terminal device #A on the candidate control resource set #A (specifically, at least one control resource in control resources in the candidate control resource set #A that occupy the M sub-bands).

Therefore, the terminal device #A may receive the control information #A on the candidate control resource set #A in a blind detection manner.

Alternatively, in this embodiment of the present invention, the terminal device #A may determine M sub-bands in which the foregoing network device succeeds in LBT, and receive the control information #A on the candidate control resource set #A in a blind detection manner.

As an example but not a limitation, the M sub-bands may be determined based on at least one of the following methods, namely, a method a and a method b.

### Method a

In this embodiment of the present invention, the network device #A may send information #1 (that is, an example of first indication information) to the terminal device #A.

As an example but not a limitation, for example, the information #1 may be used to indicate a quantity of the M sub-bands and a location of the M sub-bands.

For another example, the information #1 may be used to indicate a quantity and a location of sub-bands in the K sub-bands other than the M sub-bands.

Therefore, the terminal device can determine the M sub-bands based on the information #1.

As an example but not a limitation, when S is less than M, the information #1 may further be used to indicate a quantity and a location of the S sub-bands.

Alternatively, when S is less than M, the information #1 may be used to indicate a quantity and a location of sub-bands in the K sub-bands other than the S sub-bands.

As an example but not a limitation, in this embodiment of the present invention, the network device #A may send the information #1 to the network device #A through at least one sub-band in the M sub-bands.

The information #1 and the control information #A may be carried by different sub-bands.

Alternatively, in this embodiment of the present invention, the information #1 and the control information #A may be carried by a same sub-band.

It should be understood that, the resource that is exemplified above and that is used by the network device #A to send the information #1 to the terminal device #A is merely provided for illustrative description. This is not particularly limited in the present invention. For example, in this embodiment of the present invention, the communications system may be further provided with a preserved resource, and use of the preserved resource in transmission of data or control information is forbidden, in other words, the preserved resource may be used only for signaling transmission of the network device and the terminal device, so that the network device #A can send the information #1 to the terminal device #A through some or all resources in the preserved resource.

As an example but not a limitation, in this embodiment of the present invention, the foregoing preserved resource may be included in each sub-band, so that in this embodiment of the present invention, the network device #A can send the information #1 to the terminal device #A through the preserved resource in the M sub-bands.

As an example but not a limitation, a location of the preserved resource in each sub-band may be specified by the communications system, or a location of the preserved resource in each sub-band may be indicated by the network device to the terminal device, for example, through RRC signaling.

As an example but not a limitation, a size of the preserved resource may be specified by the communications system, or a size of the preserved resource may be indicated by the network device to the terminal device, for example, through RRC signaling.

As an example but not a limitation, the network device #A may send the information #1 to the terminal device #A in a control channel (for example, a downlink control channel).

As an example but not a limitation, the network device #A may send the information #1 to the terminal device #A in a form of bits or encoded bits.

Alternatively, the network device #A may add the information #1 into a reference signal and send it to the terminal device #A.

Alternatively, the information #1 may be a preamble or a sequence that the network device #A and the terminal device #A can identify.

It should be understood that, the foregoing exemplified specific forms of the information #1 (that is, the first indication information) are provided merely for illustrative description. The present invention is not limited thereto. Other information forms that can enable the information #1 to complete a function of indicating a sub-band obtained by the network device through contention all fall within a protection scope of the embodiments of the present invention.

### Method b

The network device #A may send control information #A and a reference signal #A through the S sub-bands. For example, each sub-band in the S sub-bands carries a part of the control information #A and the reference signal #A.

Therefore, the terminal device #A can determine, by detecting the reference signal #A, sub-bands carrying the control information (that is, the control information #A) sent by the network device #A in the K sub-bands.

Optionally, that the terminal device #A determines the S sub-bands based by detecting the reference signal #A may include: detecting, by the terminal device #A, each sub-band in K sub-bands, determining whether the sub-band carries the reference signal, and determining sub-bands carrying the reference signal as sub-bands carrying the control information.

Further, the terminal device #A can parse the control information sent by the network device #A only in S sub-bands. This can reduce a processing load of the terminal device. A method and a process through which the terminal device #A parses information based on the reference signal may be similar to the prior art. Herein, to avoid repetition, detailed descriptions of the method and process are omitted.

As an example but not a limitation, in the method a or the method b, the network device #A may send the information #1 to the terminal device #A at each TTI in a maximum channel occupied time (MCOT, Maximum Channel Occupied Time), for example, an MCOT within which a current moment falls.

Alternatively, the network device #A may send the information #1 to the terminal device #A at a first TTI or a second TTI in one MCOT (for example, an MCOT within which a current moment falls).

As an example but not a limitation, in this embodiment of the present invention, the information #1 is further used to instruct the terminal device #A to determine a TTI carrying the information #1 received for the first time as a starting TTI of one MCOT.

As an example but not a limitation, in this embodiment of the present invention, the control information #A may be used to indicate a size of a time frequency resource (which, for ease of understanding and distinction, is marked below as: a time frequency resource #X) used to transmit uplink data or downlink data. For example, the control information #A may indicate a size of the foregoing time frequency resource #A. For example, the control information #A may indicate a quantity of time frequency resource blocks (Resource Block, RB) included by the time frequency resource #X. Alternatively, the control information #A may indicate a size (in other words, a bandwidth) of a frequency domain resource corresponding to the time frequency resource #X. For example, the control information #A may indicate a quantity of sub-carriers included by the time frequency resource #X. Alternatively, the control information #A may indicate a size of a time domain resource corresponding to the time frequency resource #X. For example, the control information #A may indicate a quantity of sub-carriers included by the time frequency resource #X.

As an example but not a limitation, in this embodiment of the present invention, the control information #A may further indicate a location of a frequency domain resource corresponding to the time frequency resource #X in a frequency domain. For example, the control information #A may indicate a location of the frequency domain resource corresponding to the time frequency resource #X in a system bandwidth (that is, a frequency domain resource corresponding to a system time frequency resource).

As an example but not a limitation, in this embodiment of the present invention, the control information #A may further indicate a location of a time domain resource corresponding to the time frequency resource #X in a time domain.

As an example but not a limitation, in this embodiment of the present invention, the control information #A may further indicate a modulation and coding scheme (Modulation and Coding Scheme, MCS) that is used when the terminal device performs uplink transmission by using the frequency domain resource #A.

It should be understood that, the foregoing exemplified functions (in other words, indicated content) of the control information #A are provided merely for description. This is not particularly limited in the present invention. The functions of the control information #A may be similar to functions of information of relevant information used to indicate uplink transmission or downlink transmission in the prior art (for example, the downlink control information or the resource scheduling information). For example, the control information #A may be downlink control information (Downlink Control Information, DCI).

Therefore, optionally, S340: The network device #A may send downlink data to the terminal device #A by using a resource indicated by the control information #A.

Alternatively, optionally, S350: The terminal device #A may send uplink data to the network device #A by using a resource indicated by the control information #A.

As an example but not a limitation, in this embodiment of the present invention, "a resource indicated by the control information #A" may be: some or all resources in the foregoing M sub-bands indicated by the control information #A.

Alternatively, "a resource indicated by the control information #A" may be: some or all resources in the foregoing K sub-bands indicated by the control information #A.

Alternatively, "a resource indicated by the control information #A" may be: some or all resources in the foregoing N sub-bands indicated by the control information #A.

Optionally, the control information is control information for scheduling downlink data transmission. The first communications device sends, to the second communications device, a first data channel in at least one data channel scheduled based on the control information, where the control information includes resource allocation information, and the resource allocation information is used to indicate at least two sub-bands that are occupied by the first data channel and that are in the N sub-bands.

Optionally, the control information is control information for scheduling uplink data transmission. The first communications device receives, from the second communications device, a second data channel in at least one data channel scheduled based on the control information, where the control information includes resource allocation information, and the resource allocation information is used to indicate at least two sub-bands that are occupied by the second data channel and that are in the N sub-bands.

Applying the method of this embodiment of the present invention to a transmission process of uplink control information is described below in detail.

FIG. 8 schematically shows a processing process of a method 400 of transmitting control information #B (that is, an example of control information) between a terminal device #B (that is, an example of a first communications device) and a network device #B (that is, an example of a second communications device).

In this embodiment of the present invention, the control information #B may be uplink control information.

As an example but not a limitation, the uplink control information in this embodiment of the present invention may include, but is not limited to one or more types of the following information:

### 1. Feedback information

In this embodiment of the present invention, the uplink control information may include feedback information for downlink data.

Specifically, in this embodiment of the present invention, a feedback technology may be used for transmission of downlink data. As an example but not a limitation, the feedback technology may include, for example, the hybrid automatic repeat request (HARQ, Hybrid Automatic Repeat Request) technology.

The HARQ technology is a technology formed by combining forward error correction coding (Forward Error Correction, FEC) and the automatic repeat request (Automatic Repeat Request, ARQ).

For example, in HARQ technology, after receiving data from a transmit end, a receive end may determine whether the data is correctly decoded. If the data cannot be correctly decoded, the receive end may feed back negative acknowledgement (Negative-acknowledge, NACK) information to the transmit end, so that the transmit end may determine, based on the NACK information, that the receive end does not correctly receive the data, so that retransmission can be performed. If the data can be correctly decoded, the receive end may feed back acknowledgement (Acknowledge, NACK) information to the transmit end, so that the transmit end may determine, based on the ACK information, that the receive end correctly receives the data, so that completion of data transmission can be determined.

To be specific, in this embodiment of the present invention, the receive end may send ACK information to the transmit end in a case of a decoding success and may send NACK formation to the transmit end in a case of a decoding failure.

As an example but not a limitation, in this embodiment of the present invention, the uplink control information may include ACK information or NACK information in the HARQ technology.

It should be understood that, the foregoing exemplified content included in the feedback information is provided merely for illustrative description, and the present invention is not limited thereto. Other pieces of information that can indicate a status of receiving, by the terminal device, downlink data all fall within the protection scope of the present invention. For example, the feedback information may further include discontinuous transmission (DTX, Discontinuous Transmission) information, and the DTX information may be used to indicate that the terminal device does not receive the downlink data.

### 2. Channel quality indicator (Channel Quality Indicator, CQI) information

In this embodiment of the present invention, a CQI may be used to reflect channel quality of a physical downlink shared channel (Physical Downlink Shared Channel, PDSCH). As an example but not a limitation, in this embodiment of the present invention, 0 to 15 may be used to represent channel quality of the PDSCH. 0 represents poorest channel quality, and 15 represents best channel quality.

In this embodiment of the present invention, the terminal device may sendCQI information to the network device on a physical uplink control channel (Physical Uplink Control Channel, PUCCH) or a physical uplink shared channel (Physical Uplink Shared Channel, PUSCH). The network device may determine a radio channel condition of a current PDSCH or PUSCHbased on the CQI information, to further complete scheduling for the PDSCH. For example, in this embodiment of the present invention, the network device may determine adaptive modulation and coding (Adaptive Modulation and Coding, AMC), a modulation and coding scheme (Modulation and Coding Scheme, MCS), a code rate or a data volume of uplink transmission or downlink transmission, or the like based on the CQI information.

### 3. Rank Indication (Rank Indication, RI) information

In this embodiment of the present invention, The RI information may be used to indicate a quantity of effective data layers of the PDSCH, or the RI information may be used to indicate a quantity of code words (Code Word, CW) that the terminal device can currently support.4. Precoding matrix indicator (Precoding Matrix Indicator, PMI) information

In this embodiment of the present invention, the PMI information may be used to indicate an index (index) of a codebook set. To be specific, in a technology using a plurality of antennas, for example, the multiple-input multiple-output (Multiple-Input Multiple-Output, MIMO) technology, in baseband processing of a physical layer of the PDSCH, precoding (precoding) is performed based on a precoding matrix. The terminal device may indicate the precoding matrix by using the PMI information, so that signal quality of the PDSCH can be improved.

In this embodiment of the present invention, sending an uplink channel may be sending data or information carried on the uplink channel, where the data or the information data or information after channel encoding.

S410: The terminal device #B performs channel detection on (in other words, contends for or monitors) K sub-bands (in other words, at least one sub-band in the K sub-bands) in a carrier #B (that is, an example of a first carrier), to determine a sub-band that can be used by the terminal device #B and that is in the K sub-bands.

Optionally, the carrier #B is a carrier through which the terminal device #B wirelessly communicates with (for example, transmits control information, data, or the like to) the network device #B. Optionally, the carrier #B is a carrier in an unlicensed spectrum. Optionally, the carrier #B is a carrier in a licensed spectrum.

Optionally, a bandwidth of the carrier #B may be greater than or equal to 20 MHz. For example, a bandwidth of the carrier #B may be 40 MHz, 80 MHz, 100 MHz, 2.16 GHz, or the like.

Optionally, the carrier #B may be divided into N sub-bands, where N is an integer greater than or equal to 2. For example, the bandwidth of the carrier #B is 80 MHz, and the carrier #B is divided into four sub-bands (that is, N=4), where a bandwidth of each sub-band is 20 MHz. For another example, the bandwidth of the carrier #B is 2.16 GHz, and the carrier #B is divided into five sub-bands (that is, N=5), where a bandwidth of each sub-band is 432 MHz.

Optionally, a bandwidth of each sub-band in the N sub-bands may be less than or equal to a bandwidth processed by the terminal device #B in one time of channel detection (for example, CCA detection) on an unlicensed spectrum. For example, the bandwidth processed by the terminal device #B in one time of channel detection (for example, CCA detection) on the unlicensed spectrum is 20 MHz, and a bandwidth of a sub-band in the N sub-bands is also 20 MHz.

Optionally, a bandwidth of each sub-band in the N sub-bands may be an integer multiple of a bandwidth processed by the terminal device #B in one time of channel detection (for example, CCA detection) on an unlicensed spectrum. For example, the bandwidth processed by the terminal device #B in one time of detection (for example, CCA detection) on the unlicensed spectrum is 20 MHz, and a bandwidth of a sub-band in the N sub-bands may be 40 MHz.

Optionally, the terminal device #B performs channel detection (for example, CCA detection) on K sub-bands in a carrier #A, where the K sub-bands are sub-bands that may be used by the terminal device #B to send uplink control information to the terminal device #B, and K is a positive integer.

Optionally, the K sub-bands are determined by the network device #B and notified to the terminal device #B through signaling (for example, higher-layer signaling or physical-layer signaling).

Optionally, a quantity of the K sub-bands or a location of the K sub-bands in the carrier #B is specified by the communications system, so that the network device #B and the terminal device #B can determine the K sub-bands based on the specifications of the communications system.

Optionally, a quantity of the K sub-bands or a location of the K sub-bands in the carrier #B is predefined.

Optionally, a quantity of the K sub-bands or a location of the K sub-bands in the carrier #B is determined based on a cell identifier of a cell (which, for ease of understanding and description, is marked below as a cell #B) that is provided by the network device #B and at which the terminal device #B is located.

Optionally, a quantity of the K sub-bands or a location of the K sub-bands in the carrier #B is determined based on a terminal device identifier of the terminal device #B.

It should be noted that, the K sub-bands are K sub-bands in the N sub-bands. Optionally, K=N, that is, the K sub-bands are all sub-bands in the N sub-bands.

Optionally, K<N, that is, the K sub-bands are some sub-bands in the N sub-bands.

In this embodiment of the present invention, the K sub-bands may include P candidate control resource sets, where P is a positive integer.

Optionally, the P candidate control resource sets may include at least two candidate resource sets whose intersection set is not an empty set. That is, the at least two candidate resource sets have an overlap.

Optionally, the P candidate control resource sets may include at least two candidate resource sets whose intersection set is an empty set. That is, the at least two candidate resource sets have no overlap.

Optionally, each candidate control resource set in the P candidate control resource sets occupies at least one sub-band in the K sub-bands. For example, the K sub-bands are sub-bands 1, 2, and 3, P=3, one candidate control resource set in the three candidate control resource sets occupies the sub-bands 1 and 2, another candidate control resource set occupies the sub-bands 1 and 3, and the third candidate control resource set occupies the sub-band 2.

Optionally, the K sub-bands include P candidate control resource sets, where each sub-band in the K sub-bands includes a resource in the candidate control resource set. That is, any sub-band in the K sub-bands may be used by the network device #A to send control information to the terminal device #A. For example, the K sub-bands are sub-bands 1, 2, and 3, P=3, one candidate control resource set in the two candidate control resource sets occupies the sub-band 1, and the other candidate control resource set occupies the sub-bands 2 and 3.

Optionally, P=K, each candidate control resource set in the P candidate control resource sets occupies one sub-band in the K sub-bands, and the P candidate control resource sets and the K sub-bands are in one-to-one correspondence to each other. For example, the K sub-bands are sub-bands 1, 2, and 3, P=3, each candidate control resource set in the three candidate control resource sets occupies one of the three sub-bands, and in addition, one candidate control resource set in the three candidate control resource sets occupies the sub-band 1, another candidate control resource set occupies the sub-band 2, and the third candidate control resource set occupies the sub-band 2.

Optionally, the terminal device #B performs channel detection on the K sub-bands in the carrier #B, to determine that M sub-bands in the K sub-bands can be used by the terminal device #B, where M is a positive integer less than or equal to K.

Optionally, A method through which the terminal device #B performs channel detection on the carrier #B or sub-bands in the carrier #B is the same as or similar to the method through a network device or a terminal device performs channel detection on a carrier in an unlicensed spectrum in the prior art. Details are not described herein again.

It should be noted that, in this embodiment of the present invention, "occupying a sub-band" may indicate occupying some or all resources in a sub-band. For example, that "each candidate control resource set in the P candidate control resource sets occupies a sub-band in the K sub-bands" may indicate that resources included in each candidate control resource set in the P candidate control resource sets is located in one sub-band in the K sub-bands, or resources included in each candidate control resource set in the P candidate control resource sets occupy some resources in one sub-band in the K sub-bands, or resources included in each candidate control resource set in the P candidate control resource sets occupy all resources in one sub-band in the K sub-bands. Descriptions of same or similar cases are omitted below to avoid repetition.

It should be further noted that, a location of the candidate control resource set in a time domain may be specified by a communications system, or may be notified by the network device #B to the terminal device #B through signaling (for example, higher-layer signaling or physical-layer signaling), or may be preset, or may be determined by the network device #B and the terminal device #B in another manner. This is not limited in the present invention.

It should be further noted that, the candidate control resource set may include one or more REs, or the candidate control resource set may include one or more REGs, or the candidate control resource set may include one or more RBs, or the candidate control resource set may include one or more RB sets, or the candidate control resource set may include one or more CCEs.

It should be understood that, the foregoing exemplified resources included in the candidate control resource set are merely provided for illustrative description, and the present invention is not limited thereto. The candidate control resource set may include a resource set in another form. In this embodiment of the present invention, for ease of description, descriptions are provided by using an example in which the candidate control resource set includes an integral quantity of REs.

S420: The terminal device #B can determine a candidate control resource set #B (that is, an example of a first candidate control resource set) in the foregoing P candidate control resource sets based on a result of the channel detection. The candidate control resource set #B occupies S sub-bands in the M sub-bands, where S may be an integer greater than or equal to 1, and S may be less than or equal to M.

Optionally, the candidate control resource set #B includes one or more candidate control resource sets in the P candidate control resource sets.

Optionally, the candidate control resource set #B occupies S sub-bands in the M sub-bands, which may be that the candidate control resource set #B includes one candidate control resource set in the P candidate control resource sets, and the candidate control resource set occupies S sub-bands in the M sub-bands.

Optionally, P=K, each candidate control resource set in the P candidate control resource sets occupies one sub-band in the K sub-bands, the P candidate control resource sets are in one-to-one correspondence to the K sub-bands, and the candidate control resource set #A occupies S sub-bands in the M sub-bands, which may be that the candidate control resource set #A includes S candidate control resource sets in the P candidate control resource sets, where the S candidate control resource set are in one-to-one correspondence to the S sub-bands.

Optionally, when S is less than M, the terminal device #B may further determine the S sub-bands in the M sub-bands.

Optionally, the S sub-bands are S sub-bands located on a tail end of the M sub-bands arranged in ascending order of index numbers. For example, the network device #A determines, through channel detection, that a quantity of usable sub-bands is M=3, indexes of the M sub-bands are 0, 2, and 3, and if S=2, the S sub-bands are a sub-band 2 and a sub-band 3 (that is, S sub-bands located on a tail end of the M sub-bands arranged in ascending order of index numbers). That is, the candidate control resource set #A occupies resources in the sub-band 2 and the sub-band 3.

Optionally, the S sub-bands are S sub-bands located on a head end of the M sub-bands arranged in ascending order of index numbers. For example, the terminal device #B determines, through channel detection, that a quantity of usable sub-bands is M=3, indexes of the M sub-bands are 0, 2, and 3, and if S=2, the S sub-bands are a sub-band 0 and a sub-band 2 (that is, S sub-bands located on a head end of the M sub-bands arranged in ascending order of index numbers). That is, the candidate control resource set #B occupies resources in the sub-band 0 and the sub-band 2.

Optionally, the S sub-bands are sub-bands preset by the network device #B, or the S sub-bands are sub-bands specified by the communications system. For example, the carrier #A includes four sub-bands (N=4), indexes of the four sub-bands are 0, 1, 2, and 3, and K=N=4. That is, each sub-band in the K sub-bands may include a resource used by the terminal device #B to send uplink control information to the network device #B. S=1, and priority levels of resources that are in the sub-band and that are used to transmit the control information are divided based on different indexes of sub-bands. For example, priority levels of the indexes are 0, 2, 1, and 3. When M sub-bands that are in the four sub-bands and that can be used for channel detection include a sub-band 0, the S sub-bands specifically refer to the sub-band 0. When M sub-bands that are in the four sub-bands and that can be used for channel detection include a sub-band 2 and do not include sub-band 0, the S sub-bands specifically refer to the sub-band 2. When M sub-bands that are in the four sub-bands and that can be used for channel detection include a sub-band 1 and do not include sub-bands 0 and 2, the S sub-bands specifically refer to the sub-band 1. When M sub-bands that are in the four sub-bands and that can be used by the network device #A through channel detection include a sub-band 3 and do not include sub-bands 0, 2, and 1, the S sub-bands specifically refer to the sub-band 3.

Optionally, the S sub-bands are sub-bands specified by the communications system. For example, the communications system may specify a specific value of S, or the communications system may specify a location of the S sub-bands in the M sub-bands, so that the network device #B and the terminal device #B can determine the S sub-bands based on the foregoing specifications of the communications system.

Optionally, the S sub-bands are sub-bands determined based on a cell identifier, where the cell is a cell at which the network device #B and the terminal device #B are located. For example, the S sub-bands are determined based on the cell identifier, or a sub-band that is in the S sub-bands and that has a minimum or maximum index has a mapping relationship with the cell identifier. For example, the S sub-bands or the sub-band that is in the S sub-bands and that has a minimum or maximum index are or is determined based on a remainder after N or K modulo the cell identifier. It should be noted that, in this embodiment of the present invention, one cell identifier may be used to determine one sub-band, or one cell identifier may be used to determine a plurality of sub-bands. This is not particularly limited in the present invention.

Optionally, the S sub-bands are sub-bands determined based on an identifier of the terminal device #B. For example, the S sub-bands are determined based on the identifier of the terminal device #B, or a sub-band that is in the S sub-bands and that has a minimum or maximum index has a mapping relationship with the identifier of the terminal device #B. For example, the S sub-bands or the sub-band that is in the S sub-bands and that has a minimum or maximum index are or is determined based on a remainder after N or K or M modulo the identifier of the terminal device #B. It should be noted that, in this embodiment of the present invention, an identifier of one terminal device #B may be used to determine one sub-band, or an identifier of one terminal device #B may be used to determine a plurality of sub-bands. This is not particularly limited in the present invention.

Optionally, the S sub-bands are determined by the network device #B and notified to the terminal device #B through signaling (for example, higher-layer signaling or physical-layer signaling). The network device #B may notify the terminal device #B of indication information of the S sub-bands (for example, indexes of the S sub-bands, a specific value of S, or a location of the S sub-bands in the M sub-bands) through, for example, RRC signaling.

Optionally, the M sub-bands may have preset (for example, determined by the network device #B or specified by the communications system) priority levels, so that the network device #B and the terminal device #B may, based on the priority levels of the M sub-bands, for example, select S sub-bands in descending order of priority levels.

Optionally, the terminal device #B needs to determine the network device #B M sub-bands that can be used by the terminal device #B through the channel detection, so that the network device #B may determine, based on the M sub-bands, S sub-bands occupied by the candidate control resource set #B.

Optionally, the M sub-bands are determined by the network device #B and notified to the terminal device #B through indication information #B (that is, an example of first indication information). For example, the indication information #B may be used to indicate a quantity of the M sub-bands, or a location of the M sub-bands in the K sub-bands, or a location of the M sub-bands in the N sub-bands. For another example, the indication information #B may be used to indicate a quantity and a location of sub-bands in the K sub-bands other than the M sub-bands.

Therefore, the terminal device can determine the M sub-bands based on the indication information #B.

Optionally, the indication information #B may alternatively indicate the S sub-bands. For example, the indication information #B may indicate a quantity of the S sub-bands, or a location of the S sub-bands in the M sub-bands, or a location of the S sub-bands in the K sub-bands, or a location of the S sub-bands in the N sub-bands. For another example, the information #B may be used to indicate a quantity and a location of sub-bands in the M sub-bands other than the S sub-bands.

Optionally, the terminal device #B may send the indication information #B to the network device #B through at least one sub-band in the M sub-bands.

Optionally, the indication information #B and the control information #B may be carried by different sub-bands, or the indication information #B or the control information #B may be carried by a same sub-band.

Optionally, the terminal device #B may send the indication information #B to the network device #B through each sub-band in the M sub-bands. Further optionally, the indication information #B is repeatedly sent in each sub-band in the M sub-bands.

It should be understood that, the resource that is exemplified above and that is used by the terminal device #B to send the indication information #B to the network device #B is merely provided for illustrative description. This is not particularly limited in the present invention. For example, in this embodiment of the present invention, the communications system may be further provided with a preserved resource, and use of the preserved resource in transmission of data is forbidden, in other words, the preserved resource may be used only for transmission of the indication #B, so that the terminal device #B can send the indication information #B to the network device #B through some or all resources in the preserved resource.

Optionally, each sub-band in the N sub-bands included in the carrier #B may include the foregoing preserved resource, so that the terminal device #B can send the indication information #B to the network device #B through the preserved resource in the M sub-bands.

Optionally, each sub-band in the K sub-bands may include the foregoing preserved resource, so that the terminal device #B can send the indication information #B to the network device #B through the preserved resource in the M sub-bands.

Optionally, a location of the preserved resource in each sub-band may be specified by the communications system, or a location of the preserved resource in each sub-band may be indicated by the network device to the terminal device #A through signaling, for example, RRC signaling.

Optionally, a size of the preserved resource may be specified by the communications system, or a size of the preserved resource may be indicated by the network device to the terminal device #B through signaling, for example, RRC signaling.

Optionally, the terminal device #B may encode or modulate an information bit included in the indication information #B, then map the information bit onto the preserved resource, and send the information bit to the network device #B.

Optionally, the terminal device #B may add information included in the indication information #B to a reference signal (for example, a predefined sequence or preamble) and send the reference signal to the network device #B.

It should be understood that, the foregoing exemplified specific forms of the indication information #B (that is, the first indication information) are provided merely for illustrative description. The present invention is not limited thereto. Other information forms that can enable the indication information #B to complete a function of indicating a sub-band obtained by the terminal device #B through contention all fall within a protection scope of the embodiments of the present invention.

Optionally, the M sub-bands are determined by the network device #B by detecting a reference signal.

Optionally, the terminal device #B may send uplink control information and a reference signal through the S sub-bands. For example, each sub-band in the S sub-bands carries a part of the uplink control information and the reference signal. Therefore, the network device #B can determine, by detecting the reference signal, sub-bands carrying the control information sent by the terminal device #B in the K sub-bands.

Optionally, that the network device #B determines the S sub-bands based by detecting the reference signal may include: detecting, by the network device #B, each sub-band in K sub-bands, determining whether the sub-band carries the reference signal, and determining sub-bands carrying the reference signal as sub-bands carrying the control information. Further, the network device #B may detect, in the S sub-bands, the control information sent by the terminal device #B.

Optionally, the terminal device #B may send a reference signal through the M sub-bands. For example, each sub-band in the M sub-bands carries the reference signal. Therefore, the network device #B can determine, by detecting each sub-band in the K sub-bands, whether the sub-band carries the reference signal, to further determine whether the M sub-bands in the K sub-bands are sub-bands in which the network device succeed in LBT.

Further optionally, a method through the network device #B determines the S sub-bands in the M sub-bands may be the same as the foregoing described method of determining the S sub-bands in the M sub-bands. Details are not described herein again.

Optionally, the reference signal sent by the terminal device #B may be a reference signal used to demodulate control information, or a reference signal used to demodulate data information, or a reference signal specially used to indicate whether the terminal device #B succeeds in LBT in each sub-band.

It should be noted that, a method and a process through which the network device #B detects whether a sub-band carries a reference signal may be similar to the prior art. Herein, to avoid repetition, detailed descriptions of the method and process are omitted.

In this embodiment of the present invention, the candidate control resource set #B may occupy one sub-band in the M sub-bands (that is, a solution 1) or may occupy a plurality of sub-bands in the M sub-bands (that is, a solution 2).

### Solution 1 (S=1)

As stated above, in the solution 1, the terminal device #B sends uplink control information to the network device #B by using only one sub-band in the M sub-bands.

With regard to this, in the solution 1, each candidate control resource set in the P candidate control resource sets occupies one sub-band in the K sub-bands.

In addition, the P candidate control resource sets may be in one-to-one correspondence to the K sub-bands. That is, each candidate control resource set occupies only a corresponding sub-band.

In this case, the candidate control resource set #B occupies one sub-band in the M sub-bands.

As an example but not a limitation, that "the candidate control resource set #B occupies one sub-band in the M sub-bands" may mean that although the terminal device #B obtains a plurality of sub-bands through contention, the terminal device #B selects only a candidate control resource set in one sub-band as the candidate control resource set #B.

Alternatively, that "the candidate control resource set #B occupies one sub-band in the M sub-bands" may mean that the terminal device #B obtains only one sub-band through contention, so that the terminal device #B uses the one candidate control resource set obtained through contention as the candidate control resource set #B.

Optionally, sizes of candidate control resource sets in all sub-bands may be the same. For example, quantities of resources (for example, REs) included in candidate control resource sets in all sub-bands may be the same.

Alternatively, candidate control resource sets in different sub-bands may be different.

That is, in the solution 1, each candidate control resource set in the P candidate control resource sets occupies one sub-band.

Optionally, in this embodiment of the present invention, when the terminal device #B succeeds in LBT in a plurality of sub-bands, one sub-band is selected in the sub-bands that succeed, and control channel is sent to the terminal device through a candidate control resource set in the sub-band.

Optionally, the sub-band used to send a control channel may be predefined. For example, the sub-band used to carry a control channel may be a sub-band having a smallest number in sub-bands that succeed in LBT. For another example, the sub-band used to carry a control channel may be a sub-band having a largest number in sub-bands that succeed in LBT.

For example, the terminal device #B may send, to the network device #B, information (that is, an example of first indication information) used to indicate a sub-band succeeding in LBT.

For another example, the terminal device #B may send, to the network device #B, information (that is, another example of first indication information) that indicates the candidate control resource set #B (in other words, a sub-band occupied by the candidate control resource set #B).

For another example, the network device #B may perform blind detection on a reference signal in K sub-bands that the candidate control resource set #B to determine information of a sub-band in which the terminal device #B succeeds in LBT.

Therefore, the network device #B may determine, based on the first indication information or information of a sub-band in which the terminal device #B succeeds in LBT, a sub-band used to carry a control channel, to further determine the candidate control resource set #B.

In addition, the network device #B may perform blind detection on the candidate control resource set #B (or a sub-band occupied by the candidate control resource set #B) to obtain control information #B.

Because the network device needs to perform blind detection on only one sub-band, a blind detection capacity of the network device is not increased in the control channel transmission method.

### Solution 2 (that is, M≥S≥1)

As stated above, in the solution 2, the terminal device #B sends control information to the network device #B by using one or more sub-bands in the M sub-bands.

In addition, in the solution 2, each candidate control resource set in the P candidate control resource sets occupies one sub-band in the K sub-bands (that is, a solution 2A), or some candidate control resource sets in the P candidate control resource sets occupies a plurality of sub-bands in the K sub-bands (that is, a solution 2B). The foregoing two cases are separately described below in detail.

### Solution 2A

Specifically, in this embodiment of the present invention, each candidate control resource set in the P candidate control resource sets occupies one sub-band in the K sub-bands.

In this embodiment of the present invention, the candidate control resource set #B may include one candidate control resource set, or the candidate control resource set #B may alternatively include a plurality of candidate control resource sets. This is not particularly limited in the present invention.

Optionally, sizes of all candidate control resource sets in the P candidate control resource sets may be the same. In other words, candidate control resource sets in all sub-bands in the M sub-bands may be the same.

That is, in the solution 2A, each candidate control resource set in the P candidate control resource sets occupies one sub-band.

### Solution 2B

Specifically, in this embodiment of the present invention, each candidate control resource set in the P candidate control resource sets occupies a plurality of (two or more) sub-bands in the K sub-bands.

As an example but not a limitation, in this embodiment of the present invention, there are two or more candidate control resource sets occupying different quantities of sub-bands in the P candidate control resource sets. For example, one or more candidate control resource sets in the P candidate control resource sets may occupy one sub-band, one or more other candidate control resource sets in the P candidate control resource sets may occupy two sub-bands, and one or more still other candidate control resource sets in the P candidate control resource sets may occupy L sub-bands, where L may be an integer that is greater than or equal to 2 and that is less than or equal to M.

In this case, the candidate control resource set #A may include one candidate control resource set.

Optionally, sizes of all candidate control resource sets in the P candidate control resource sets may be the same, that is, for any two candidate control resource sets occupying different quantities of sub-bands, sizes of the any two candidate control resource sets occupying different quantities of sub-bands may be the same.

That is, in the solution 2B, there may be a candidate control resource set occupying a plurality of sub-bands in the P candidate control resource sets.

For example, the candidate control resource set #B may occupy a plurality of sub-bands.

In this embodiment of the present invention, because all the M sub-bands are allocated to the terminal device #B, the terminal device #B theoretically can use each sub-band in the M sub-bands to send control information.

In contrast, in this embodiment of the present invention, the terminal device #B may be enabled to use S sub-bands in the M sub-bands to send the control information due to the following considerations:
1. When a power at which the control information is sent by using the S sub-bands is the same as a power at which the control information is sent by using the M sub-bands, or when a power at which the control information is sent by using the S sub-bands reaches a maximum transmit power, when uplink control information is sent by using the S sub-bands, performance of the uplink control information is not affected.
2. For another terminal device that sends information in a sub-band, other than the S sub-bands, in M sub-bands, a probability that the terminal device succeeds in LBT the sub-band, other than the S sub-bands, in the M sub-bands.
3. If there is another terminal device that transmits uplink control information together with the terminal device #B in a multiplexing manner, interference between the terminal devices can be reduced by enabling different terminal devices to send uplink control information in different sub-bands.

S430: The terminal device #B may send the control information #B to the network device #B on the candidate control resource set #B (specifically, at least one control resource in control resources in the candidate control resource set #B that occupy the M sub-bands).

Therefore, the network device #B may receive the control information #B on the candidate control resource set #B in a blind detection manner.

Alternatively, in this embodiment of the present invention, the network device #B may determine M sub-bands in which the foregoing network device that succeeds in LBT, and receive the control information #B on the candidate control resource set #B in a blind detection manner.

As an example but not a limitation, the M sub-bands may be determined based on at least one of the following methods, namely, a method c and a method d.

### Method c

In this embodiment of the present invention, the terminal device #B may send information #2 (that is, an example of first indication information) to the network device #B.

As an example but not a limitation, for example, the information #2 may be used to indicate a quantity of the M sub-bands and a location of the M sub-bands.

For another example, the information #2 may be used to indicate a quantity and a location of sub-bands in the K sub-bands other than the M sub-bands.

Therefore, the terminal device can determine the M sub-bands based on the information #2.

As an example but not a limitation, when S is less than M, the information #2 may further be used to indicate a quantity and a location of the S sub-bands.

Alternatively, when S is less than M, the information #2 may be used to indicate a quantity and a location of sub-bands in the K sub-bands other than the S sub-bands.

As an example but not a limitation, in this embodiment of the present invention, the terminal device #B may send the information #2 to the network device #B through at least one sub-band in the M sub-bands.

The information #2 and the control information #B may be carried by different sub-bands.

Alternatively, in this embodiment of the present invention, the information #2 and the control information #B may be carried by a same sub-band.

It should be understood that, the resource that is exemplified above and that is used by the terminal device #B to send the information #2 to the network device #B is merely provided for illustrative description. This is not particularly limited in the present invention. For example, in this embodiment of the present invention, the communications system may be further provided with a preserved resource, and use of the preserved resource in transmission of data or control information is forbidden, in other words, the preserved resource may be used only for signaling transmission of the network device and the terminal device, so that the terminal device #B can send the information #2 to the network device #B through some or all resources in the preserved resource.

As an example but not a limitation, in this embodiment of the present invention, the foregoing preserved resource may be included in each sub-band, so that in this embodiment of the present invention, the terminal device #B can send the information #2 to the network device #B through the preserved resource in the M sub-bands.

As an example but not a limitation, a location of the preserved resource in each sub-band may be specified by the communications system, or a location of the preserved resource in each sub-band may be indicated by the network device to the terminal device, for example, through RRC signaling.

As an example but not a limitation, a size of the preserved resource may be specified by the communications system, or a size of the preserved resource may be indicated by the network device to the terminal device, for example, through RRC signaling.

As an example but not a limitation, the terminal device #B may send the information #2 to the network device #B in a control channel (for example, an uplink control channel).

As an example but not a limitation, the terminal device #B may send the information #2 to the network device #B in a form of bits or encoded bits.

Alternatively, the terminal device #B may add the information #2 into a reference signal and send it to the network device #B.

Alternatively, the information #2 may be a preamble or a sequence that the terminal device #B and the network device #B can identify.

It should be understood that, the foregoing exemplified specific forms of the information #2 (that is, the first indication information) are provided merely for illustrative description. The present invention is not limited thereto. Other information forms that can enable the information #2 to complete a function of indicating a sub-band obtained by the terminal device through contention all fall within a protection scope of the embodiments of the present invention.

### Method d

The terminal device #B may send control information #B and a reference signal #B through the S sub-bands. For example, each sub-band in the S sub-bands carries a part of the control information #B and the reference signal #B.

Therefore, the network device #B can determine, by detecting the reference signal #B, sub-bands carrying the control information (that is, the control information #B) sent by the terminal device #B in the K sub-bands.

Optionally, that the network device #B determines the S sub-bands based by detecting the reference signal #B may include: detecting, by the network device #B, each sub-band in K sub-bands, determining whether the sub-band carries the reference signal, and determining sub-bands carrying the reference signal as sub-bands carrying the control information.

Further, the network device #B can parse the control information sent by the terminal device #B only in S sub-bands. This can reduce a processing load of the network device. A method and a process through which the network device #B parses information based on the reference signal may be similar to the prior art. Herein, to avoid repetition, detailed descriptions of the method and process are omitted.

According to the control information transmission method of an embodiment of the present invention, the first communications device that serves as a transmit end is enabled to detect K sub-bands that are pre-configured in a first carrier and that are used to transmit control information, so that M sub-bands that can be used (for example, obtained through contention) by the first communications device can be determined in the K sub-bands, and further, the first communications device can determine a first candidate control resource set in the M sub-bands, and therefore, can send control information through the first candidate control resource set. To be specific, compared with the prior art, it is not required that the terminal device can use the first carrier to perform wireless communication only when determining that all resources within a bandwidth range of the first carrier are used, so that a possibility that the terminal device can use the first carrier to transmit the control information and reliability are improved. Further, communication efficiency can be improved, service transmission latency can be reduced, and user experience can be improved. It should be noted that, the foregoing method 200 and the foregoing method 300 may be used separately or in combination. This is not particularly limited in the present invention.

In addition, in this embodiment of the present invention, the foregoing terminal device #A and the foregoing terminal device #B may be a same terminal device or different terminal devices. This is not particularly limited in the present invention. To be specific, one terminal device can perform actions of terminal devices as two parties described in the methods 200 and 300.

In addition, in this embodiment of the present invention, the foregoing network device #A and the foregoing network device #B may be a same network device or different network devices. This is not particularly limited in the present invention. To be specific, one network device can perform actions of two network devices described in the methods 200 and 300.

In addition, in this embodiment of the present invention, a quantity N of sub-bands into which the carrier #1 is divided may be the same as or different from a quantity N of sub-bands into which the carrier #A (or the carrier #B) is divided. This is not particularly limited in the present invention.

In addition, a quantity K of sub-bands detected by the device #1 in the carrier #1 may be the same as or different from a quantity K of sub-bands detected by the network device #A in the carrier #A. This is not particularly limited in the present invention. Similarly, a quantity K of sub-bands detected by the device #1 in the carrier #1 may be the same as or different from a quantity K of sub-bands detected by the terminal device #B in the carrier #B. This is not particularly limited in the present invention.

A quantity S of sub-bands occupied by the candidate control resource set #1 may be the same as or different from a quantity S of sub-bands occupied by the candidate control resource set #A (or the candidate control resource set #B). This is not particularly limited in the present invention.

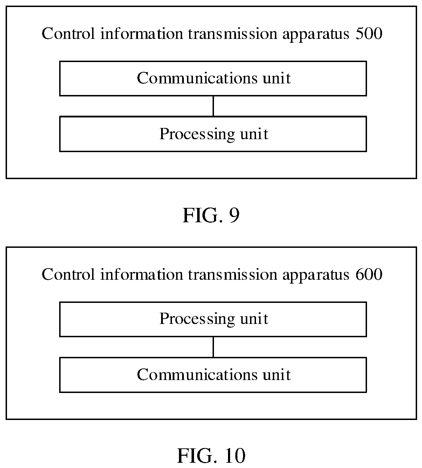

FIG. 9 is a schematic block diagram of a control information transmission apparatus 500 according to an embodiment of the present invention. The control information transmission apparatus 500 may correspond to (for example, may be configured on or may be) a transmit-end device for control information in the embodiments of the present invention, for example, the device #1 described in the foregoing method 200, or the network device (for example, the network device #A) described in the foregoing method 300, or the terminal device (for example, the terminal device #B) described in the foregoing method 400. In addition, modules or units in the uplink control information transmission apparatus 500 are respectively configured to perform the actions or processing processes performed by the transmit-end device for control information in the foregoing method 200 or the foregoing method 300 or 400. Herein, to avoid repetition, detailed descriptions of the method and process are omitted.

In this embodiment of the present invention, the apparatus 500 may be a communications device (for example, a network device or a terminal device). In this case, the apparatus 500 may include: a processor and a transceiver, where the processor and the transceiver are in a communication connection. Optionally, the device further includes a memory, where the memory is in a communication connection with the processor. Optionally, the processor, the memory, and the transceiver may be in a communication connection. The memory may be configured to store an instruction, and the processor is configured to execute the instruction stored by the memory, to control the transceiver to send information or a signal.

In this case, a transceiver unit in the apparatus 500 shown in FIG. 9 may correspond to the transceiver, and a processing unit in the apparatus 500 shown in FIG. 9 may correspond to the processor.

Alternatively, in this embodiment of the present invention, the apparatus 500 may be configured on a chip (or a chip system) in a communications device (for example, a network device or a terminal device). In this case, the apparatus 500 may include: a processor and an input/output interface, where the processor is in a communication connection with a transceiver in the communications device through the input/output interface. Optionally, the device further includes a memory, where the memory is in communication connection with the processor. Optionally, the processor, the memory, and the transceiver may be in a communication connection. The memory may be configured to store an instruction, and the processor is configured to execute the instruction stored by the memory, to control the transceiver to send information or a signal.

In this case, a transceiver unit in the apparatus 500 shown in FIG. 9 may correspond to the input/output interface, and a processing unit in the apparatus 500 shown in FIG. 9 may correspond to the processor.

FIG. 10 is a schematic block diagram of a control information transmission apparatus 600 according to an embodiment of the present invention. The control information transmission apparatus 600 may correspond to (for example, may be configured on or may be) a receive-end device for control information in the embodiments of the present invention, for example, the device #2 described in the foregoing method 200, or the terminal device (for example, the terminal #A) described in the foregoing method 300, or the network device (for example, the network device #B) described in the foregoing method 400. In addition, modules or units in the uplink control information transmission apparatus 600 are respectively configured to perform the actions or processing processes performed by the receive-end device for control information in the foregoing method 200 or the foregoing method 300 or 400. Herein, to avoid repetition, detailed descriptions of the method and process are omitted.

In this embodiment of the present invention, the apparatus 500 may be a communications device (for example, a network device or a terminal device). In this case, the apparatus 500 may include: a processor and a transceiver, where the processor and the transceiver are in a communication connection. Optionally, the device further includes a memory, where the memory is in communication connection with the processor. Optionally, the processor, the memory, and the transceiver may be in a communication connection. The memory may be configured to store an instruction, and the processor is configured to execute the instruction stored by the memory, to control the transceiver to send information or a signal.

In this case, a transceiver unit in the apparatus 600 shown in FIG. 10 may correspond to the transceiver, and a processing unit in the apparatus 600 shown in FIG. 10 may correspond to the processor.

Alternatively, in this embodiment of the present invention, the apparatus 600 may be configured on a chip (or a chip system) in a communications device (for example, a network device or a terminal device). In this case, the apparatus 600 may include: a processor and an input/output interface, where the processor is in a communication connection with a transceiver in the communications device through the input/output interface. Optionally, the device further includes a memory, where the memory is in communication connection with the processor. Optionally, the processor, the memory, and the transceiver may be in a communication connection. The memory may be configured to store an instruction, and the processor is configured to execute the instruction stored by the memory, to control the transceiver to send information or a signal.

In this case, a transceiver unit in the apparatus 600 shown in FIG. 10 may correspond to the input/output interface, and a processing unit in the apparatus 600 shown in FIG. 10 may correspond to the processor.

It should be noted that, the foregoing method embodiment of this application may be applied to a processor, or implemented by a processor. The processor may be an integrated circuit chip and has a signal processing capability. In an implementation process, steps in the foregoing method embodiments can be implemented by using a hardware integrated logical circuit in the processor, or by using instructions in a form of software. The processor may be a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logical device, a discrete gate or transistor logic device, or a discrete hardware component. It may implement or perform the methods, the steps, and logical block diagrams that are disclosed in the embodiments of the present invention. The general purpose processor may be a microprocessor, or the processor may be any conventional processor or the like. Steps of the methods disclosed with reference to the embodiments of the present invention may be directly executed and accomplished by means of a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory, and a processor reads information in the memory and completes the steps in the foregoing methods in combination with hardware of the processor.

It may be understood that, the memory in the embodiments of the present invention may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that, the memory of the systems and methods described in this specification includes but is not limited to these and any memory of another proper type.

It should be understood that, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that, sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the embodiments of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that, the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the embodiments of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention.

## Claims

1. A control information transmission method, wherein the method is applied to a communications system comprising a first communications device and a second communications device, wherein a first carrier used by the communications system is divided into N sub-bands, wherein N≥2, and a frequency domain resource of the first carrier is a frequency domain resource used based on a contention mechanism, and the method comprises:
detecting, by the first communications device, at least one sub-band in K sub-bands, to determine, in the K sub-bands, M sub-bands that can be used by the first communications device, wherein the K sub-bands belong to the N sub-bands, the K sub-bands comprise P candidate control resource sets, and each candidate control resource set in the P candidate control resource sets occupies at least one sub-band in the K sub-bands, wherein N≥K≥2, K≥M≥1, and P≥2;
determining, by the first communications device, a first candidate control resource set in the P candidate control resource sets based on a result of the detection, wherein the first candidate control resource set occupies S sub-bands in the M sub-bands, wherein M≥S≥1; and
sending, by the first communications device, control information to the second communications device through a resource in the first candidate control resource set.

2. The method according to claim 1, wherein P=K, each candidate control resource set in the P candidate control resource sets occupies one sub-band in the K sub-bands, and the P candidate control resource sets and the K sub-bands are in one-to-one correspondence.

3. The method according to claim 1 or 2, wherein the S sub-bands are some sub-bands in the M sub-bands.

4. The method according to any one of claims 1 to 3, wherein the S sub-bands are S sub-bands located on a tail end of the M sub-bands arranged in ascending order of index numbers; or
the S sub-bands are S sub-bands located on a head end of the M sub-bands arranged in ascending order of index numbers; or
the S sub-bands are sub-bands preset by the network device; or
the S sub-bands are sub-bands specified by the communications system; or
the S sub-bands are sub-bands determined based on a cell identifier and/or a device identifier.

5. The method according to any one of claims 1 to 4, further comprising:
sending, by the first communications device, first indication information to the second communications device, wherein the first indication information is used to indicate the M sub-bands that can be used by the first communications device.

6. The method according to claim 5, wherein the sending, by the first communications device, first indication information to the second communications device comprises:
sending, by the first communications device, the first indication information to the second communications device through a resource in at least one sub-band in the M sub-bands, wherein a size and/or a location of the resource in the at least one sub-band are or is specified by the communications system, or a size and/or a location of the resource in the at least one sub-band are or is determined by the first communications device or the second communications device.

7. The method according to any one of claims 1 to 6, wherein the first communications device is a network device, and the second communications device is a terminal device.

8. The method according to claim 7, further comprising:
sending, by the first communications device to the second communications device, a first data channel in at least one data channel scheduled based on the control information, wherein the control information comprises resource allocation information, and the resource allocation information is used to indicate at least two sub-bands that are occupied by the first data channel and that are in the N sub-bands; or
receiving, by the first communications device from the second communications device, a second data channel in at least one data channel scheduled based on the control information, wherein the control information comprises resource allocation information, and the resource allocation information is used to indicate at least two sub-bands that are occupied by the second data channel and that are in the N sub-bands.

9. The method according to any one of claims 1 to 6, wherein the first communications device is a terminal device, and the second communications device is a network device.

10. A control information transmission method, wherein the method is applied to a communications system comprising a first communications device and a second communications device, wherein a first carrier used by the communications system is divided into N sub-bands, wherein N≥2, and a frequency domain resource of the first carrier is a frequency domain resource used based on a contention mechanism, and the method comprises:
determining, by the second communications device, a first candidate control resource set in P candidate control resource sets in K sub-bands, wherein the first candidate control resource set occupies S sub-bands in M sub-bands, the M sub-bands are sub-bands that are in the K sub-bands and that can be used by the first communications device, the K sub-bands belongs to the N sub-bands, and each candidate control resource set in the P candidate control resource sets occupies at least one sub-band in the K sub-bands, wherein N≥K≥2, K≥M≥1, P≥2, and M≥S≥1; and
receiving, by the second communications device, control information from the first communications device through a resource in the first candidate control resource set.

11. The method according to claim 10, wherein P=K, each candidate control resource set in the P candidate control resource sets occupies one sub-band in the K sub-bands, and the P candidate control resource sets and the K sub-bands are in one-to-one correspondence.

12. The method according to claim 10 or 11, wherein the S sub-bands are some sub-bands in the M sub-bands.

13. The method according to any one of claims 10 to 12, wherein the S sub-bands are S sub-bands located on a tail end of the M sub-bands arranged in ascending order of index numbers; or
the S sub-bands are S sub-bands located on a head end of the M sub-bands arranged in ascending order of index numbers; or
the S sub-bands are sub-bands preset by the network device; or
the S sub-bands are sub-bands specified by the communications system; or
the S sub-bands are sub-bands determined based on a cell identifier and/or a device identifier.

14. The method according to any one of claims 10 to 13, further comprising:
receiving, by the second communications device, first indication information from the first communications device, wherein the first indication information is used to indicate the M sub-bands; and
determining, by the second communications device, the first candidate control resource set in the P candidate control resource sets based on the M sub-bands.

15. The method according to claim 14, wherein the receiving, by the second communications device, first indication information from the first communications device comprises:
receiving, by the second communications device, the first indication information from the second communications device through a resource in at least one sub-band in the M sub-bands, wherein a size and/or a location of the resource in the at least one sub-band are or is specified by the communications system, or a size and/or a location of the resource in the at least one sub-band are or is determined by the first communications device or the second communications device.

16. The method according to any one of claims 10 to 15, wherein the first communications device is a network device, and the second communications device is a terminal device.

17. The method according to claim 16, further comprising:
receiving, by the second communications device from the first communications device, a first data channel in at least one data channel scheduled based on the control information, wherein the control information comprises resource allocation information, and the resource allocation information is used to indicate at least two sub-bands that are occupied by the first data channel and that are in the N sub-bands; or
sending, by the second communications device to the first communications device, a second data channel in at least one data channel scheduled based on the control information, wherein the control information comprises resource allocation information, and the resource allocation information is used to indicate at least two sub-bands that are occupied by the second data channel and that are in the N sub-bands.

18. The method according to any one of claims 10 to 15, wherein the first communications device is a terminal device, and the second communications device is a network device.

19. A control information transmission apparatus, wherein the apparatus is configured in a communications system comprising the apparatus and a second communications device, wherein a first carrier used by the communications system is divided into N sub-bands, wherein N≥2, and a frequency domain resource of the first carrier is a frequency domain resource used based on a contention mechanism, and the apparatus comprises:
a processing unit, configured to detect at least one sub-band in K sub-bands, to determine, in the K sub-bands, M sub-bands that can be used by the apparatus, wherein the K sub-bands belong to the N sub-bands, the K sub-bands comprise P candidate control resource sets, and each candidate control resource set in the P candidate control resource sets occupies at least one sub-band in the K sub-bands, wherein N≥K≥2, K≥M≥1, and P≥2; and used to determine a first candidate control resource set in the P candidate control resource sets based on a result of the detection, wherein the first candidate control resource set occupies S sub-bands in the M sub-bands, wherein M≥S≥1; and
a communications unit, used to send control information to the second communications device through a resource in the first candidate control resource set.

20. The apparatus according to claim 19, wherein P=K, each candidate control resource set in the P candidate control resource sets occupies one sub-band in the K sub-bands, and the P candidate control resource sets and the K sub-bands are in one-to-one correspondence.

21. The apparatus according to claim 19 or 20, wherein the S sub-bands are some sub-bands in the M sub-bands.

22. The apparatus according to any one of claims 19 to 21, wherein the S sub-bands are S sub-bands located on a tail end of the M sub-bands arranged in ascending order of index numbers;
the S sub-bands are S sub-bands located on a head end of the M sub-bands arranged in ascending order of index numbers; or
the S sub-bands are sub-bands preset by the network device; or
the S sub-bands are sub-bands specified by the communications system; or
the S sub-bands are sub-bands determined based on a cell identifier and/or a device identifier.

23. The apparatus according to any one of claims 19 to 22, wherein the communications unit is further used to send first indication information to the second communications device, wherein the first indication information is used to indicate the M sub-bands that can be used by the apparatus.

24. The apparatus according to claim 23, wherein the communications unit is specifically used to send the first indication information to the second communications device through a resource in at least one sub-band in the M sub-bands, wherein a size and/or a location of the resource in the at least one sub-band are or is specified by the communications system, or a size and/or a location of the resource in the at least one sub-band are or is determined by the apparatus or the second communications device.

25. The apparatus according to any one of claims 19 to 24, wherein the apparatus is a network device, and the second communications device is a terminal device.

26. The apparatus according to claim 25, wherein the communications unit is further configured to send, to the second communications device, a first data channel in at least one data channel scheduled based on the control information, wherein the control information comprises resource allocation information, and the resource allocation information is used to indicate at least two sub-bands that are occupied by the first data channel and that are in the N sub-bands; or
the communications unit is further configured to receive, from the second communications device, a second data channel in at least one data channel scheduled based on the control information, wherein the control information comprises resource allocation information, and the resource allocation information is used to indicate at least two sub-bands that are occupied by the second data channel and that are in the N sub-bands.

27. The apparatus according to any one of claims 19 to 24, wherein the apparatus is a terminal device, and the second communications device is a network device.

28. A control information transmission apparatus, wherein the apparatus is configured in a communications system comprising a first communications device and the apparatus, wherein a first carrier used by the communications system is divided into N sub-bands, wherein N≥2, and a frequency domain resource of the first carrier is a frequency domain resource used based on a contention mechanism, and the apparatus comprises:
a processing unit, used to determine a first candidate control resource set in P candidate control resource sets in K sub-bands, wherein the first candidate control resource set occupies S sub-bands in M sub-bands, the M sub-bands are sub-bands that are in the K sub-bands and that can be used by the first communications device, the K sub-bands belongs to the N sub-bands, and each candidate control resource set in the P candidate control resource sets occupies at least one sub-band in the K sub-bands, wherein N≥K≥2, K≥M≥1, P≥2, and M≥S≥1; and
a communications unit, configured to receive control information from the apparatus through a resource in the first candidate control resource set.

29. The apparatus according to claim 28, wherein P=K, each candidate control resource set in the P candidate control resource sets occupies one sub-band in the K sub-bands, and the P candidate control resource sets and the K sub-bands are in one-to-one correspondence.

30. The apparatus according to claim 28 or 29, wherein the S sub-bands are some sub-bands in the M sub-bands.

31. The apparatus according to any one of claims 28 to 30, wherein the S sub-bands are S sub-bands located on a tail end of the M sub-bands arranged in ascending order of index numbers;
the S sub-bands are S sub-bands located on a head end of the M sub-bands arranged in ascending order of index numbers; or
the S sub-bands are sub-bands preset by the network device; or
the S sub-bands are sub-bands specified by the communications system; or
the S sub-bands are sub-bands determined based on a cell identifier and/or a device identifier.

32. The apparatus according to any one of claims 28 to 31, wherein the communications unit is further configured to receive first indication information from the first communications device, wherein the first indication information is used to indicate the M sub-bands; and
the communications unit is further configured to determine the first candidate control resource set in the P candidate control resource sets based on the M sub-bands.

33. The apparatus according to claim 32, wherein the communications unit is specifically used to receive the first indication information from the apparatus through a resource in at least one sub-band in the M sub-bands, wherein a size and/or a location of the resource in the at least one sub-band are or is specified by the communications system, or a size and/or a location of the resource in the at least one sub-band are or is determined by the first communications device or the apparatus.

34. The apparatus according to any one of claims 28 to 33, wherein the first communications device is a network device, and the apparatus is a terminal device.

35. The apparatus according to claim 34, wherein the communications unit is further configured to receive, from the first communications device, a first data channel in at least one data channel scheduled based on the control information, wherein the control information comprises resource allocation information, and the resource allocation information is used to indicate at least two sub-bands that are occupied by the first data channel and that are in the N sub-bands; or
the communications unit is further configured to send, to the first communications device, a second data channel in at least one data channel scheduled based on the control information, wherein the control information comprises resource allocation information, and the resource allocation information is used to indicate at least two sub-bands that are occupied by the second data channel and that are in the N sub-bands.

36. The apparatus according to any one of claims 28 to 33, wherein the first communications device is a network device, and the apparatus is a terminal device.
